(19) Europäisches Patentamt

European Patent Office

Office européen des brevets

(11) **EP 4 613 824 A1**

(12) **EUROPEAN PATENT APPLICATION**

(43) Date of publication:
**10.09.2025 Bulletin 2025/37**

(21) Application number: **25161816.1**

(22) Date of filing: **05.03.2025**

(51) International Patent Classification (IPC):
**C09D 11/101** *(2014.01)*  **C09D 11/38** *(2014.01)*
**C09D 11/322** *(2014.01)*  **C09D 11/324** *(2014.01)*

(52) Cooperative Patent Classification (CPC):
**C09D 11/101; C09D 11/322; C09D 11/324;
C09D 11/38**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.03.2024 JP 2024034096**

(71) Applicant: **Seiko Epson Corporation
Tokyo 160-8801 (JP)**

(72) Inventors:
• **SATO, Chigusa**
**Suwa-shi, 392-8502 (JP)**
• **TAKEUCHI, Emi**
**Suwa-shi, 392-8502 (JP)**
• **YOSHIDA, Yoshinobu**
**Suwa-shi, 392-8502 (JP)**

(74) Representative: **Lewis Silkin LLP
Arbor
255 Blackfriars Road
London SE1 9AX (GB)**

(54) **RADIATION-CURABLE INK JET INK COMPOSITION**

(57) A radiation-curable ink jet ink composition includes a nitrogen-containing monofunctional polymerizable compound and a photoinitiator, in which the nitrogen-containing monofunctional polymerizable compound includes N-vinyl methyl oxazolidinone, and the photoinitiator includes a high-molecular-weight photoinitiator having a molecular weight of 500 or greater.

FIG. 1

EP 4 613 824 A1

# FIG. 1

20

230

234
235

F

SUB-SCANNING
DIRECTION
T1

S2

232
231

S1

T2

220

MAIN SCANNING
DIRECTION

**Description**

The present application is based on, and claims priority from JP Application Serial Number 2024-034096, filed March 6, 2024, the disclosure of which is hereby incorporated by reference herein in its entirety.

BACKGROUND

1. Technical Field

The present disclosure relates to a radiation-curable ink jet ink composition.

2. Related Art

An ink jet recording method enables recording of high-definition images using relatively simple devices, and thus rapid development has been made in various fields. Under such circumstances, various research has been conducted on a printing method that uses a radiation-curable inkjet ink composition. For example, WO2021/199760A discloses an ink composition for photocurable ink jet printing, containing 5% to 50% by mass of vinyl methyl oxazolidinone with respect to the total amount of the ink composition, 10% to 50% by mass of a monofunctional photopolymerizable monomer having a glass transition temperature of 10°C or lower with respect to the total amount of the ink composition, a coloring material, and a photopolymerization initiator.

However, it has been found that there is room for improvement in odor and curing properties of a recorded material when printing is performed using the ink composition for photocurable inkjet printing described in WO2021/199760A.

SUMMARY

According to an aspect of the present disclosure, there is provided a radiation-curable inkjet ink composition including: a nitrogen-containing monofunctional polymerizable compound; and a photoinitiator, in which the nitrogen-containing monofunctional polymerizable compound includes N-vinyl methyl oxazolidinone or acryloyl morpholine, and the photoinitiator includes a high-molecular-weight photoinitiator having a molecular weight of 500 or greater.

BRIEF DESCRIPTION OF THE DRAWINGS

FIG. 1 is a schematic view showing a recording device used in the present embodiment.
FIG. 2 is a table showing results of examples.
FIG. 3 is a table showing results of examples.
FIG. 4 is a table showing results of examples.
FIG. 5 is a table showing results of examples.

DESCRIPTION OF EMBODIMENTS

Hereinafter, embodiments of the present disclosure (hereinafter, referred to as "present embodiment") will be described in detail, but the present disclosure is not limited thereto, and various modifications can be made within a range not departing from the scope of the present disclosure.

1. Radiation-curable ink jet ink composition

A radiation-curable ink jet ink composition of the present embodiment is a composition containing a nitrogen-containing monofunctional polymerizable compound and a photoinitiator, in which the nitrogen-containing monofunctional polymerizable compound includes N-vinyl methyl oxazolidinone or acryloyl morpholine, and the photoinitiator includes a high-molecular-weight photoinitiator having a molecular weight of 500 or greater.

In a case of a non-absorbing recording medium such as a soft packaging material or a shrink film, it has been known that recording is performed thereon using a radiation-curable ink jet ink. However, an odor derived from the ink is likely to remain on a recorded material printed using the radiation-curable ink jet ink composition, and thus there is a problem in that the radiation-curable ink jet ink composition is difficult to use in applications requiring low odor such as food packing applications and other soft packaging applications.

Under the above-described circumstances, the present inventors have found that the odor of a recorded material to be obtained can be reduced by using a high-molecular-weight photoinitiator in the radiation-curable ink jet ink composition. However, it has been clarified, as a result of research and development conducted by the present inventors, that the curing properties of the ink composition are not sufficient in a case of using the high-molecular weight photoinitiator.

Therefore, in the present embodiment, N-vinyl methyl oxazolidinone or acryloyl morpholine is used in combination as a nitrogen-containing monofunctional polymerizable compound in addition to the high-molecular-weight photoinitiator having a molecular weight of 500 or greater. When the radiation-curable ink jet ink composition includes N-vinyl methyl oxazolidinone or acryloyl morpholine, the curing properties can be sufficiently obtained even in a case where a high-molecular-weight photoinitiator is used. That is, the radiation-curable ink jet ink composition of the present embodiment also has excellent curing properties in addition to the effect of reducing the odor of a recorded material due to the high-molecular-weight photoinitiator.

Hereinafter, each component of the radiation-curable ink jet ink composition of the present embodiment will be described in detail. Further, hereinafter, the radiation-curable ink jet ink composition of the present embodiment will also be simply referred to as "ink composition".

1.1. Polymerizable compound

In the present embodiment, the concept of the polymerizable compound includes a monofunctional polymerizable compound containing one polymerizable functional group and a polyfunctional polymerizable compound containing two or more polymerizable functional groups. When the ink composition of the present embodiment is irradiated with radiation, a polymerization reaction of the polymerizable compound contained in the ink composition is started, and the ink composition is cured. The polymerizable compound includes a monomer and an oligomer. The polymerizable compound is not particularly limited, and examples thereof include a nitrogen-containing monomer, a nitrogen-containing oligomer, a cyclic ether-containing monomer, a cyclic ether-containing oligomer, a hydroxyl group-containing monomer, and a hydroxyl group-containing oligomer. The polymerizable compound may be used alone or in combination of two or more kinds thereof.

Further, in the present embodiment, the polymerization number of monomers in an oligomer is not particularly limited, but is, for example, in a range of 2 to 100, in a range of 2 to 50, in a range of 2 to 25, in a range of 2 to 10, or in a range of 2 to 5.

The content of the polymerizable compound is preferably in a range of 60% to 95% by mass, more preferably in a range of 65% to 90% by mass, and still more preferably in a range of 70% to 90% by mass with respect to the total amount of the ink composition.

The weighted average of the glass transition temperatures of the polymerizable compounds contained in the ink composition according to the present embodiment is preferably in a range of 20°C to 70°C, more preferably in a range of 25°C to 65°C, still more preferably in a range of 30°C to 60°C, and even still more preferably in a range of 40°C to 50°C. When the weighted average of the glass transition temperatures is 20°C or higher, the blocking resistance tends to be improved. Further, when the weighted average of the glass transition temperatures is 70°C or lower, the followability of the film formed of the ink composition on a recording medium in a case where the recording medium is heated and contracted tends to be improved. That is, the shrink properties of the ink composition tend to be improved. Therefore, when the weighted average of the glass transition temperatures of the polymerizable compounds contained in the ink composition according to the present embodiment is in the above-described ranges, both the blocking resistance and the shrink properties tend to be achieved. Further, the term "blocking" denotes a phenomenon in which stacked recorded materials adhere to each other due to the pressure sensitive adhesiveness of the ink, and this adhesion is unlikely to occur when the blocking resistance is improved.

In addition, "glass transition temperatures of the polymerizable compounds" denotes the glass transition temperatures of homopolymers of the polymerizable compounds. Further, the weighted average of the glass transition temperatures of the polymerizable compounds can be adjusted by the glass transition temperatures of the homopolymers of the polymerizable compounds to be used and the content mass ratio between the polymerizable compounds to be used.

Here, a method of calculating the weighted average of the glass transition temperatures of the homopolymers of the polymerizable compounds will be described. The value of the weighted average of the glass transition temperatures of the homopolymers is defined as $Tg_{All}$, the glass transition temperature of the homopolymer of each polymerizable compound is defined as $Tg_N$, and the content mass ratio of the polymerizable compound is defined as $X_N$ (wt%). N represents a number starting from 1 according to the kind of the polymerizable compound contained in the ink composition of the present embodiment. For example, when three kinds of polymerizable compounds are used, $Tg_1$, $Tg_2$, and $Tg_3$ are generated. The weighted average $Tg_{All}$ of the glass transition temperatures of the homopolymers is the sum of the product of the glass transition temperature $Tg_N$ of the homopolymer calculated using each polymerizable compound and the content mass ratio $X_N$. Therefore, Equation (1) is established.

$$Tg_{All} = \sum(Tg_N \times X_N) \ (1)$$

Further, a method of measuring the glass transition temperature of the homopolymer of the polymerizable compound can be performed by differential scanning calorimetry (DSC) in conformity with JIS K 7121. For example, a model "DSC6220" (manufactured by SEIKO ELECTRONICS CO., LTD.) is used as a measuring device, and a sample obtained by polymerizing a polymerizable compound to an extent that the glass transition temperature of the homopolymer of the polymerizable compound is constant can be used as the sample.

The molecular weight of the polymerizable compound is preferably in a range of 50 to 500, more preferably in a range of 75 to 450, and still more preferably in a range of 100 to 400. When the molecular weight of the polymerizable compound is in the above-described ranges, the curing properties tend to be further improved.

1.1.1. Monofunctional polymerizable compound

In the present embodiment, the monofunctional polymerizable compound is not particularly limited, and examples thereof include a nitrogen-containing monofunctional polymerizable compound, a cyclic ether-containing monofunctional polymerizable compound, a hydroxyl group-containing monofunctional polymerizable compound, and monofunctional polymerizable compounds other than these monofunctional polymerizable compounds.

1.1.1.1. Nitrogen-containing monofunctional polymerizable compound

The ink composition of the present embodiment contains a nitrogen-containing monofunctional polymerizable compound. In this manner, the curing properties tend to be sufficiently obtained even when the ink composition of the present embodiment contains a high-molecular-weight photoinitiator described below. The factor that improves the curing properties is not particularly limited, but it is considered that the nitrogen-containing monofunctional polymerizable compound is unlikely to be affected by loss of radicals derived from a photoinitiator due to oxygen.

The ink composition of the present embodiment contains N-vinyl methyl oxazolidinone (VMOX) or acryloyl morpholine (ACMO) as the nitrogen-containing monofunctional polymerizable compound. When the ink composition of the present embodiment contains VMOX or ACMO, the curing properties of the ink composition tend to be further improved. Further, the ink composition of the present embodiment may contain nitrogen-containing monofunctional polymerizable compounds other than VMOX and ACMO. The nitrogen-containing monofunctional polymerizable compounds other than VMOX and ACMO are not particularly limited, and examples thereof include nitrogen-containing monofunctional vinyl monomers such as N-vinylcaprolactam, N-vinylformamide, N-vinyl carbazole, N-vinylacetamide, and N-vinylpyrrolidone, nitrogen-containing monofunctional acrylate monomers such as N-(2-hydroxyethyl)acrylamide, nitrogen-containing monofunctional acrylamide monomers such as (meth)acrylamide, N-hydroxymethyl(meth)acrylamide, diacetone acrylamide, N,N-dimethyl(meth)acrylamide, and (meth)acrylamide of a dimethylaminoethyl acrylate benzyl chloride quaternary salt, and oligomers thereof.

Further, it is preferable that the ink composition of the present embodiment contain a nitrogen-containing monofunctional polymerizable compound having a nitrogen-containing heterocyclic structure. When the ink composition of the present embodiment contains a nitrogen-containing monofunctional polymerizable compound having a nitrogen-containing heterocyclic structure, the curing properties of the ink composition tend to be further improved. VMOX and ACMO are each a nitrogen-containing monofunctional polymerizable compound having a nitrogen-containing heterocyclic structure.

The content of the nitrogen-containing monofunctional polymerizable compound is preferably in a range of 10% to 50% by mass, more preferably in a range of 15% to 45% by mass, still more preferably in a range of 20% to 40% by mass, and even still more preferably in a range of 20% to 35% by mass with respect to the total amount of the ink composition. When the content of the nitrogen-containing monofunctional polymerizable compound with respect to the total amount of the ink composition is in the above-described ranges, the curing properties of the ink composition tend to be further improved.

The content of the nitrogen-containing monofunctional polymerizable compound is preferably in a range of 15% to 55% by mass, more preferably in a range of 20% to 50% by mass, still more preferably in a range of 25% to 45% by mass, and even still more preferably in a range of 25% to 40% by mass with respect to the total amount of the polymerizable compound. When the content of the nitrogen-containing monofunctional polymerizable compound with respect to the total amount of the polymerizable compound is in the above-described ranges, the curing properties of the ink composition tend to be further improved.

The content of the nitrogen-containing monofunctional polymerizable compound is preferably in a range of 20% to 65% by mass, more preferably in a range of 25% to 60% by mass, and still more preferably in a range of 30% to 55% by mass with respect to the total amount of the monofunctional polymerizable compound. When the content of the nitrogen-containing monofunctional polymerizable compound with respect to the total amount of the monofunctional polymerizable compound is in the above-described ranges, the curing properties of the ink composition tend to be further improved.

The molecular weight of the nitrogen-containing monofunctional polymerizable compound is preferably in a range of 100 to 200 and more preferably in a range of 110 to 180. When the molecular weight of the nitrogen-containing monofunctional polymerizable compound is in the above-described ranges, the curing properties of the ink composition tend to be further improved.

The glass transition temperature of the nitrogen-containing monofunctional polymerizable compound is preferably in a range of 50°C to 200°C and more preferably in a range of 100°C to 175°C. When the glass transition temperature of the nitrogen-containing monofunctional polymerizable compound is in the above-described ranges, the blocking resistance and the shrink properties tend to be further improved.

1.1.1.2. Cyclic ether-containing monofunctional polymerizable compound

The ink composition of the present embodiment may contain a cyclic ether-containing monofunctional polymerizable compound. The cyclic ether-containing monofunctional polymerizable compound is not particularly limited, and examples thereof include tetrahydrofurfuryl acrylate, cyclic trimethylolpropane formal acrylate, (2-methyl-2-ethyl-1,3-dioxolane-4-yl)methyl acrylate, and oligomers thereof. When the ink composition of the present embodiment contains a cyclic ether-containing monofunctional polymerizable compound, the curing properties of the ink composition and the adhesiveness of the ink composition to a recording medium tend to be further improved.

The content of the cyclic ether-containing monofunctional polymerizable compound is preferably in a range of 10% to 50% by mass, more preferably in a range of 15% to 45% by mass, and still more preferably in a range of 20% to 40% by mass with respect to the total amount of the ink composition. When the content of the cyclic ether-containing monofunctional polymerizable compound with respect to the total amount of the ink composition is in the above-described ranges, the curing properties of the ink composition tend to be further improved.

The content of the cyclic ether-containing monofunctional polymerizable compound is preferably in a range of 10% to 55% by mass, more preferably in a range of 15% to 50% by mass, still more preferably in a range of 20% to 45% by mass, and even still more preferably in a range of 25% to 40% by mass with respect to the total amount of the polymerizable compound. When the content of the cyclic ether-containing monofunctional polymerizable compound with respect to the total amount of the polymerizable compound is in the above-described ranges, the curing properties of the ink composition tend to be further improved.

The content of the cyclic ether-containing monofunctional polymerizable compound is preferably in a range of 20% to 60% by mass, more preferably in a range of 25% to 55% by mass, and still more preferably in a range of 30% to 50% by mass with respect to the total amount of the monofunctional polymerizable compound. When the content of the cyclic ether-containing monofunctional polymerizable compound with respect to the total amount of the monofunctional polymerizable compound is in the above-described ranges, the curing properties of the ink composition tend to be further improved.

The molecular weight of the cyclic ether-containing monofunctional polymerizable compound is preferably in a range of 150 to 300 and more preferably in a range of 175 to 250. The molecular weight of the cyclic ether-containing monofunctional polymerizable compound is in the above-described ranges, the curing properties of the ink composition tend to be further improved.

The glass transition temperature of the cyclic ether-containing monofunctional polymerizable compound is preferably in a range of -50°C to 100°C and more preferably in a range of -25°C to 50°C. When the glass transition temperature of the cyclic ether-containing monofunctional polymerizable compound is in the above-described ranges, the blocking resistance and the shrink properties tend to be further improved.

1.1.1.3. Hydroxyl group-containing monofunctional polymerizable compound

The ink composition of the present embodiment may contain a hydroxyl group-containing monofunctional polymerizable compound. The hydroxyl group-containing monofunctional polymerizable compound is not particularly limited, and examples thereof include 4-hydroxybutyl (meth)acrylate, 2-hydroxybutyl (meth)acrylate, 2-hydroxyethyl (meth)acrylate, 2-hydroxypropyl (meth)acrylate, 2-hydroxy-3-phenoxypropyl (meth)acrylate, N-hydroxymethyl (meth)acrylamide, and oligomers thereof. When the ink composition of the present embodiment contains a hydroxyl group-containing monofunctional polymerizable compound, the curing properties of the ink composition tend to be further improved.

The content of the hydroxyl group-containing monofunctional polymerizable compound is preferably in a range of 5.0% to 30.0% by mass, more preferably in a range of 7.5% to 25.0% by mass, and still more preferably in a range of 10.0% to 20.0% by mass with respect to the total amount of the ink composition. When the content of the hydroxyl group-containing monofunctional polymerizable compound with respect to the total amount of the ink composition is in the above-described ranges, the curing properties of the ink composition tend to be further improved.

The content of the hydroxyl group-containing monofunctional polymerizable compound is preferably in a range of 7.5% to 40.0% by mass, more preferably in a range of 10.0% to 35.0% by mass, and still more preferably in a range of 12.5% to 30.0% by mass with respect to the total amount of the polymerizable compound. When the content of the hydroxyl group-containing monofunctional polymerizable compound with respect to the total amount of the polymerizable compound is in the above-described ranges, the curing properties of the ink composition tend to be further improved.

The content of the hydroxyl group-containing monofunctional polymerizable compound is preferably in a range of 10.0% to 45.0% by mass, more preferably in a range of 12.5% to 40.0% by mass, and still more preferably in a range of 15.0% to 35.0% by mass with respect to the total amount of the monofunctional polymerizable compound. When the content of the hydroxyl group-containing monofunctional polymerizable compound with respect to the total amount of the monofunctional polymerizable compound is in the above-described ranges, the curing properties of the ink composition tend to be further improved.

The molecular weight of the hydroxyl group-containing monofunctional polymerizable compound is preferably in a range of 50 to 250 and more preferably in a range of 100 to 200. The molecular weight of the hydroxyl group-containing monofunctional polymerizable compound is in the above-described ranges, the curing properties of the ink composition tend to be further improved.

The glass transition temperature of the hydroxyl group-containing monofunctional polymerizable compound is preferably in a range of -100°C to 50°C and more preferably in a range of -50°C to 25°C. When the glass transition temperature of the hydroxyl group-containing monofunctional polymerizable compound is in the above-described ranges, the blocking resistance and the shrink properties tend to be further improved.

1.1.1.4. Aromatic group-containing monofunctional polymerizable compound

The ink composition of the present embodiment may contain an aromatic group-containing monofunctional polymerizable compound. The aromatic group-containing monofunctional polymerizable compound is not particularly limited, and examples thereof include phenoxyethyl (meth)acrylate, benzyl (meth)acrylate, alkoxylated 2-phenoxyethyl (meth)acrylate, ethoxylated nonylphenyl (meth)acrylate, alkoxylated nonylphenyl (meth)acrylate, p-cumylphenol EO-modified (meth)acrylate, 2-hydroxy-3-phenoxypropyl (meth)acrylate, and oligomers thereof.

The content of the aromatic group-containing monofunctional polymerizable compound is preferably in a range of 10% to 50% by mass, more preferably in a range of 15% to 45% by mass, and still more preferably in a range of 20% to 40% by mass with respect to the total amount of the ink composition. When the content of the aromatic group-containing monofunctional polymerizable compound with respect to the total amount of the ink composition is in the above-described ranges, the odor and the curing properties of the ink composition tend to be further improved.

The content of the aromatic group-containing monofunctional polymerizable compound is preferably in a range of 10% to 55% by mass, more preferably in a range of 15% to 50% by mass, still more preferably in a range of 20% to 45% by mass, and even still more preferably in a range of 25% to 40% by mass with respect to the total amount of the polymerizable compound. When the content of the aromatic group-containing monofunctional polymerizable compound with respect to the total amount of the polymerizable compound is in the above-described ranges, the odor and the curing properties of the ink composition tend to be further improved.

The content of the aromatic group-containing monofunctional polymerizable compound is preferably in a range of 20% to 60% by mass, more preferably in a range of 25% to 55% by mass, and still more preferably in a range of 30% to 50% by mass with respect to the total amount of the monofunctional polymerizable compound. When the content of the aromatic group-containing monofunctional polymerizable compound with respect to the total amount of the monofunctional polymerizable compound is in the above-described ranges, the odor and the curing properties of the ink composition tend to be further improved.

1.1.1.5. Saturated aliphatic group-containing monofunctional polymerizable compound

The ink composition of the present embodiment may contain a saturated aliphatic group-containing monofunctional polymerizable compound. The saturated aliphatic group-containing monofunctional polymerizable compound is not particularly limited, and examples thereof include an alicyclic group-containing monofunctional monomer such a tert-butylcyclohexyl acrylate (TBCHA), isobornyl acrylate, 2-(meth)acrylic acid-1,4-dioxaspiro[4,5]dec-2-ylmethyl, a linear or branched aliphatic group-containing monofunctional monomer such as isoamyl (meth)acrylate, stearyl (meth)acrylate, lauryl (meth)acrylate, octyl (meth)acrylate, decyl (meth)acrylate, isodecyl (meth)acrylate, isomyristyl (meth)acrylate, isostearyl (meth)acrylate, 2-hydroxybutyl (meth)acrylate, butoxyethyl (meth)acrylate, tetrahydrofurfuryl (meth)acrylate, 2-hydroxyethyl (meth)acrylate, 2-hydroxypropyl (meth)acrylate, or 2-(2-ethoxyethoxy)ethyl acrylate, lactone-modified plastic (meth)acrylate, and oligomers thereof.

The content of the saturated aliphatic group-containing monofunctional polymerizable compound is preferably in a range of 10% to 50% by mass, more preferably in a range of 15% to 45% by mass, and still more preferably in a range of

## EP 4 613 824 A1

20% to 40% by mass with respect to the total amount of the ink composition. When the content of the saturated aliphatic group-containing monofunctional polymerizable compound with respect to the total amount of the ink composition is in the above-described ranges, the curing properties of the ink composition tend to be further improved.

The content of the saturated aliphatic group-containing monofunctional polymerizable compound is preferably in a range of 10% to 55% by mass, more preferably in a range of 15% to 50% by mass, still more preferably in a range of 20% to 45% by mass, and even still more preferably in a range of 25% to 40% by mass with respect to the total amount of the polymerizable compound. When the content of the saturated aliphatic group-containing monofunctional polymerizable compound with respect to the total amount of the polymerizable compound is in the above-described ranges, the curing properties of the ink composition tend to be further improved.

The content of the saturated aliphatic group-containing monofunctional polymerizable compound is preferably in a range of 20% to 60% by mass, more preferably in a range of 25% to 55% by mass, and still more preferably in a range of 30% to 50% by mass with respect to the total amount of the monofunctional polymerizable compound. When the content of the saturated aliphatic group-containing monofunctional polymerizable compound with respect to the total amount of the monofunctional polymerizable compound is in the above-described ranges, the curing properties of the ink composition tend to be further improved.

The molecular weight of the saturated aliphatic group-containing monofunctional polymerizable compound is preferably in a range of 100 to 300 and more preferably in a range of 150 to 250. When the molecular weight of the saturated aliphatic group-containing monofunctional polymerizable compound is in the above-described ranges, the curing properties of the ink composition tend to be further improved.

The glass transition temperature of the saturated aliphatic group-containing monofunctional polymerizable compound is preferably in a range of 0°C to 150°C and more preferably in a range of 25°C to 100°C. When the glass transition temperature of the saturated aliphatic group-containing monofunctional polymerizable compound is in the above-described ranges, the blocking resistance and the shrink properties tend to be further improved.

1.1.1.6. Other monofunctional polymerizable compound

The ink composition of the present embodiment may contain other monofunctional polymerizable compounds in addition to the above-described monofunctional polymerizable compounds. Examples of the other monofunctional polymerizable compounds include unsaturated carboxylic acids such as (meth)acrylic acid, itaconic acid, crotonic acid, isocrotonic acid, and maleic acid, salts of the unsaturated carboxylic acids, esters, urethanes, amides, and anhydrides of the unsaturated carboxylic acids, acrylonitrile, styrene, various unsaturated polyesters, unsaturated polyether, unsaturated polyamide, and unsaturated urethane.

The content of the other monofunctional polymerizable compounds is not particularly limited, but is, for example, in a range of 0.1% to 5.0% by mass, in a range of 0.1% to 2.5% by mass, or in a range of 0.1% to 1.0% by mass with respect to the total amount of the ink composition. Alternatively, the ink composition may contain no other monofunctional polymerizable compounds.

The content of the other monofunctional polymerizable compounds is not particularly limited, but is, for example, in a range of 0.1% to 5.0% by mass, in a range of 0.1% to 2.5% by mass, or in a range of 0.1% to 1.0% by mass with respect to the total amount of the polymerizable compound. Alternatively, the ink composition may contain no other monofunctional polymerizable compounds.

The content of the other monofunctional polymerizable compounds is not particularly limited, but is, for example, in a range of 0.1% to 5.0% by mass, in a range of 0.1% to 2.5% by mass, or in a range of 0.1% to 1.0% by mass with respect to the total amount of the monofunctional polymerizable compound. Alternatively, the ink composition may contain no other monofunctional polymerizable compounds.

The molecular weight of the other monofunctional polymerizable compounds is preferably in a range of 100 to 300 and more preferably in a range of 150 to 250.

The glass transition temperature of the other monofunctional polymerizable compounds is preferably in a range of 0°C to 150°C and more preferably in a range of 25°C to 100°C.

The total amount of the monofunctional polymerizable compounds is preferably in a range of 30.0% to 80.0% by mass, more preferably in a range of 35.0% to 77.5% by mass, still more preferably in a range of 40.0% to 75.0% by mass, and even still more preferably in a range of 45.0% to 72.5% by mass with respect to the total amount of the ink composition.

The total amount of the monofunctional polymerizable compounds is preferably 50% by mass or greater, more preferably in a range of 50% to 95% by mass, still more preferably in a range of 55% to 90% by mass, and even still more preferably in a range of 60% to 85% by mass with respect to the total amount of the polymerizable compound. When the content of the monofunctional polymerizable compounds is in the above-described ranges, the flexibility of the film formed of the ink composition on a recording medium tends to be improved, and the followability of the film in a case where the recording medium is heated and contracted tends to be improved. That is, the shrink properties of the ink composition tend to be improved.

1.1.2. Polyfunctional polymerizable compound

The ink composition of the present embodiment may or may not contain a polyfunctional polymerizable compound. When the ink composition of the present embodiment contains a polyfunctional polymerizable compound, the curing properties tend to be further improved. The polyfunctional polymerizable compound is not particularly limited, and examples thereof include a vinyl ether group-containing (meth)acrylate, a bifunctional (meth)acrylate, a tri- or higher functional (meth)acrylate, and oligomers thereof. When the ink composition of the present embodiment contains a polyfunctional polymerizable compound, the curing properties of the ink composition tend to be further improved.

1.1.2.1. Vinyl ether group-containing (meth)acrylate

The ink composition of the present embodiment may or may not contain a vinyl ether group-containing (meth)acrylate. The vinyl ether group-containing (meth)acrylate is not particularly limited, and examples thereof include a compound represented by Formula (1). The high-molecular-weight photoinitiator tends to increase the viscosity of the ink composition, but the viscosity of the ink composition tends to be decreased and the jetting stability tends to be further improved when the ink composition contains such a vinyl ether group-containing (meth)acrylate. Further, the curing properties of the ink composition are further improved, and the improvement of the curing properties enables a further increase in the recording speed.

$$CH_2=CR_1\text{-}COOR_2\text{-}O\text{-}CH\text{-}CH\text{-}R_3 \qquad (1)$$

(In the formula, $R_1$ represents a hydrogen atom or a methyl group, $R_2$ represents a divalent organic residue having 2 to 20 carbon atoms, and $R_3$ represents a hydrogen atom or a monovalent organic residue having 1 to 11 carbon atoms.)

In Formula (1), examples of the divalent organic residue having 2 to 20 carbon atoms as $R_2$ include a linear, branched, or cyclic alkylene group having 2 to 20 carbon atoms which may be substituted, an alkylene group having 2 to 20 carbon atoms which has an oxygen atom via an ether bond and/or an ester bond in the structure and may be substituted, and a divalent aromatic group having 6 to 11 carbon atoms which may be substituted. Among these, an alkylene group having 2 to 6 carbon atoms such as an ethylene group, an n-propylene group, an isopropylene group, or a butylene group and an alkylene group having 2 to 9 carbon atoms which has an oxygen atom via an ether bond in the structure such as an oxyethylene group, an oxy n-propylene group, an oxyisopropylene group, or an oxybutylene group are preferable. Further, from the viewpoint that the viscosity of the composition can be further decreased and the curing properties of the composition are further enhanced, a compound having a glycol ether chain, in which $R_2$ represents an alkylene group having 2 to 9 carbon atoms which has an oxygen atom via an ether bond in the structure such as an oxyethylene group, an oxy n-propylene group, an oxyisopropylene group, or an oxybutylene group, is more preferable.

In Formula (1), as the monovalent organic residue having 1 to 11 carbon atoms as $R_3$, a linear, branched, or cyclic alkyl group having 1 to 10 carbon atoms which may be substituted or an aromatic group having 6 to 11 carbon atoms which may be substituted is suitable. Among these, an alkyl group having 1 or 2 carbon atoms which is a methyl group or an ethyl group or an aromatic group having 6 to 8 carbon atoms such as a phenyl group or a benzyl group is suitably used.

When the above-described organic residues are groups which may be substituted, the substituents thereof are classified into groups having carbon atoms and groups having no carbon atoms. First, when the substituent is a group having carbon atoms, the number of carbon atoms is counted as the number of carbon atoms of the organic residue. The groups having carbon atoms are not limited to the following examples, and examples thereof include a carboxyl group and an alkoxy group. Next, the groups having no carbon atoms are not limited to the following examples, and examples thereof include a hydroxyl group and a halo group.

The compound represented by Formula (1) is not particularly limited, and specific examples thereof include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(2-vinyloxyethoxy)ethyl methacrylate, 2-(2-vinyloxyethoxy)ethyl acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, 2-(vinyloxyisopropoxyisopropoxy)ethyl (meth)acrylate, 2-(vinyloxyethoxyethoxy)propyl (meth)acrylate, 2-(vinyloxyethoxyisopropoxy)propyl (meth)acrylate, 2-(vinyloxyisopropoxyethoxy)propyl (meth)acrylate, 2-(vinyloxyisopropoxyisopropoxy)propyl (meth)acrylate, 2-(vinyloxyethoxyethoxy)isopropyl (meth)acrylate, 2-(vinyloxyethoxyisopropoxy)isopropyl (meth)acrylate, 2-(vinyloxyisopropoxyethoxy)isopropyl (meth)acrylate, 2-(vinyloxyisopropoxyisopropoxy)isopropyl (meth)acrylate, 2-(vinyloxyethoxyethoxy)ethyl (meth)acrylate, 2-(vinyloxyethoxyethoxyethoxy)ethyl (meth)acrylate, 2-(isopropenoxyethoxy)ethyl (meth)acrylate, 2-(isopropenoxyethoxyethoxy)ethyl (meth)acrylate, 2-(isopropenoxyethoxyethoxyethoxy)ethyl (meth) acrylate, 2-(isopropenoxyethoxyethoxyethoxy)ethyl (meth)acrylate, polyethylene glycol monovinyl ether (meth) acrylate, and polypropylene glycol monovinyl ether (meth)acrylate. Among these specific examples, from the viewpoint of easily achieving the balance between the curing properties and the viscosity of the composition, 2-(2-vinyloxyethoxy)ethyl acrylate is particularly preferable. Further, in the present embodiment, 2-(2-vinyloxyethoxy)ethyl acrylate will also be referred to as VEEA.

The content of the vinyl ether group-containing (meth)acrylate is preferably in a range of 5% to 50% by mass, more preferably in a range of 10% to 40% by mass, and still more preferably in a range of 10% to 30% by mass with respect to the total amount of the ink composition. When the content of the vinyl ether group-containing (meth)acrylate with respect to the total amount of the ink composition is in the above-described ranges, the curing properties of the ink composition tend to be further improved, and the viscosity thereof tends to be further decreased.

The content of the vinyl ether group-containing (meth)acrylate is preferably in a range of 10.0% to 60.0% by mass, more preferably in a range of 12.5% to 50.0% by mass, and still more preferably in a range of 15.0% to 40.0% by mass with respect to the total amount of the polymerizable compound. When the content of the vinyl ether group-containing (meth)acrylate with respect to the total amount of the polymerizable compound is in the above-described ranges, the curing properties of the ink composition tend to be further improved, and the viscosity thereof tends to be further decreased.

The molecular weight of the vinyl ether group-containing (meth)acrylate is preferably in a range of 100 to 350 and more preferably in a range of 150 to 300. The molecular weight of the vinyl ether group-containing (meth)acrylate is in the above-described ranges, the curing properties of the ink composition tend to be more improved.

The glass transition temperature of the vinyl ether group-containing (meth)acrylate is preferably in a range of 0°C to 100°C and more preferably in a range of 25°C to 75°C. When the glass transition temperature of the vinyl ether group-containing (meth)acrylate is in the above-described ranges, the blocking resistance and the shrink properties tend to be more improved. 1.1.2.2 Bifunctional (meth)acrylate

The ink composition of the present embodiment may or may not contain a bifunctional (meth)acrylate. The bifunctional (meth)acrylate is not particularly limited, and examples thereof include dipropylene glycol diacrylate (DPGDA), tripropylene glycol diacrylate (TPGDA), diethylene glycol di(meth)acrylate, triethylene glycol di(meth)acrylate, tetraethylene glycol di(meth)acrylate, polyethylene glycol di(meth)acrylate, dipropylene glycol dimethacrylate, tripropylene glycol di(meth)acrylate, polypropylene glycol di(meth)acrylate, 1,4-butanediol di(meth)acrylate, 1,6-hexanediol di(meth)acrylate (HDDA), 1,9-nonanediol di(meth)acrylate, neopentyl glycol di(meth)acrylate, dimethylol-tricyclodecane di(meth)acrylate, ethylene oxide (EO) adduct di(meth)acrylate of bisphenol A, propylene oxide (PO) adduct di(meth) acrylate of bisphenol A, neopentyl glycol di(meth)acrylate hydroxypivalate, and polytetramethylene glycol di(meth) acrylate.

The content of the bifunctional (meth)acrylate is preferably in a range of 5% to 50% by mass, more preferably in a range of 10% to 40% by mass, and still more preferably in a range of 10% to 30% by mass with respect to the total amount of the ink composition. When the content of the bifunctional (meth)acrylate with respect to the total amount of the ink composition is in the above-described ranges, the curing properties of the ink composition tend to be further improved, and the viscosity thereof tends to be further decreased.

The content of the bifunctional (meth)acrylate is preferably in a range of 10.0% to 60.0% by mass, more preferably in a range of 12.5% to 50.0% by mass, and still more preferably in a range of 15.0% to 40.0% by mass with respect to the total amount of the polymerizable compound. When the content of the bifunctional (meth)acrylate with respect to the total amount of the polymerizable compound is in the above-described ranges, the curing properties of the ink composition tend to be further improved, and the viscosity thereof tends to be further decreased.

The molecular weight of the bifunctional (meth)acrylate is preferably in a range of 150 to 400 and more preferably in a range of 200 to 350. When the molecular weight of the bifunctional (meth)acrylate is in the above-described ranges, the curing properties of the ink composition tend to be further improved.

The glass transition temperature of the bifunctional (meth)acrylate is preferably in a range of 0°C to 150°C and more preferably in a range of 25°C to 125°C. When the glass transition temperature of the bifunctional (meth)acrylate is in the above-described ranges, the blocking resistance and the shrink properties tend to be further improved.

1.1.2.3. Tri- or higher functional (meth)acrylate

The ink composition of the present embodiment may or may not contain a trifunctional or higher polyfunctional(meth)acrylate. The trifunctional or higher polyfunctional(meth)acrylate is not particularly limited, and examples thereof include trimethylolpropane tri(meth)acrylate, EO-modified trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, caprolactone-modified trimethylolpropane tri(meth)acrylate, pentaerythritol ethoxy tetra(meth)acrylate, caprolactam-modified dipentaerythritol hexa(meth)acrylate, and dipentaerythritol polyacrylate (A-DPH).

The content of the trifunctional or higher polyfunctional(meth)acrylate is preferably in a range of 5.0% to 20.0% by mass and more preferably in a range of 10.0% to 17.5% by mass with respect to the total amount of the ink composition.

The content of the trifunctional or higher polyfunctional (meth)acrylate is preferably in a range of 10.0% to 60.0% by mass, more preferably in a range of 12.5% to 50.0% by mass, and still more preferably in a range of 15.0% to 40.0% by mass with respect to the total amount of the polymerizable compound.

The total amount of the polyfunctional polymerizable compound is preferably in a range of 7% to 45% by mass, more preferably in a range of 8% to 40% by mass, still more preferably in a range of 9% to 35% by mass, and even still more preferably in a range of 10% to 30% by mass with respect to the total amount of the ink composition.

The total amount of the polyfunctional polymerizable compound is preferably in a range of 8% to 55% by mass, more preferably in a range of 9% to 50% by mass, still more preferably in a range of 10% to 45% by mass, even still more preferably in a range of 11% to 40% by mass, and even still more preferably in a range of 12% to 35% by mass with respect to the total amount of the polymerizable compound.

1.2. Photoinitiator

The ink composition of the present embodiment contains a photoinitiator. The photoinitiator generates an active species when irradiated with radiation. The photoinitiator may also include a compound that generates an active species by being irradiated with radiation and has a function as a photosensitizer. Further, the function as the photosensitizer is a function of absorbing light having a certain wavelength and emitting fluorescence having another wavelength, specifically, a function of absorbing light having a wavelength of about 300 to 450 nm and emitting fluorescence having a wavelength of about 400 to 500 nm. The photoinitiator includes a high-molecular-weight photoinitiator having a molecular weight of 500 or greater and a low-molecular-weight photoinitiator having a molecular weight of less than 500. Further, hereinafter, a high-molecular-weight photoinitiator having a molecular weight of 500 or greater is also simply referred to as a high-molecular-weight photoinitiator, and a low-molecular-weight photoinitiator having a molecular weight of less than 500 is also simply referred to as a low-molecular-weight photoinitiator. The photoinitiator may be used alone or in combination of two or more kinds thereof.

The content of the photoinitiator is preferably in a range of 1% to 20% by mass and more preferably in a range of 5% to 15% by mass with respect to the total amount of the ink composition.

1.2.1. High-molecular-weight photoinitiator

The ink composition of the present embodiment contains a high-molecular-weight photoinitiator. Since a high-molecular-weight photoinitiator is unlikely to be volatilized, the odor of the ink composition is reduced by allowing the ink composition of the present disclosure to contain a high-molecular-weight photoinitiator.

Further, a low-molecular-weight component in the ink composition is likely to be volatilized and thus is considered to be the cause of deterioration of the odor. Therefore, it is considered that when a low-molecular-weight photoinitiator is used, an unreacted part of the low-molecular-weight photoinitiator remains in the coating film and is volatilized, and as a result, the odor is deteriorated. In this regard, since the high-molecular-weight photoinitiator is unlikely to be volatilized, the odor of the ink composition is considered to be reduced by using the high-molecular-weight photoinitiator. However, the mechanism by which the odor of the ink composition is reduced is not limited to the description above.

The molecular weight of the high-molecular-weight photoinitiator is 500 or greater, preferably in a range of 500 to 2000, more preferably in a range of 750 to 1950, and still more preferably in a range of 1000 to 1900. When the molecular weight of the high-molecular-weight photoinitiator is in the above-described ranges, the odor tends to be reduced and the curing properties tend to be excellent. The high-molecular-weight photoinitiator is not particularly limited as long as the molecular weight thereof is 500 or greater, and examples thereof include thioxanthone-based initiators, $\alpha$-hydroxyketone-based initiators, ketosulfonic acid-based initiators, and amine-based initiators. Further, some of the amine-based initiators have a function as a photosensitizer.

More specific examples of the high-molecular-weight photoinitiator include 1-[4-(4-benzoylphenylsulfanyl) phenyl]-2-methyl-2-[(4-methylphenyl)sulfonyl]-1-propan-1-one (CAS: 272460-97-6), oligo-[2-hydroxy-2-methyl-1-(4-(1-methylvinyl)phenyl)propanone (CAS: 163702-01-0), $\alpha$-[2-[(9-oxo-9H-thioxanthenyl)oxy]acetyl]-$\omega$-[(2-[(9-oxo-9H-thioxanthenyl)oxy]acetyl]oxy]poly(oxy-1,4-butanediyl) (CAS: 813452-37-8), 1,3-di({$\alpha$-[1-chloro-9-oxo-9H-thioxanthen-4-yl)oxy]acetylpoly[oxy(1-methylethylene)]}oxy)-2,2-bis({$\alpha$-[1-chloro-9-oxo-9H-thioxanthen-4-yl] oxy}acetylpoly[oxy(1-methylethylene)]}oxymethyl)propane (CAS: 1003567-83-6), a mixture of 1,3-di({-4-(dimethylamino)benzoylpoly[oxy(1-methylethylene)]}oxy)-2,2-bis({-4-(dimethylamino)-benzoylpoly[oxy(1-methylethylene)]}oxymethyl)propane and {α-4-(dimethylamino)benzoylpoly(oxyethylene)-poly[oxy(1-methylethylene)]-poly(oxyethylene)}4-dimethylamino)benzoate (CAS: 1003567-84-7 and 1003557-17-2), and polyethylene glycol di(β-4-[4-(2-dimethylamino-2-benzyl)butaonylphenyl]piperazine)propionate (CAS: 886463-10-1). Among these, from the viewpoints of the odor and the curing properties, it is preferable that the ink composition contain α-[2-[(9-oxo-9H-thioxanthenyl)oxy]acetyl]-ω-[[2-[(9-oxo-9H-thioxanthenyl)oxy]acetyl]oxy]poly(oxy-1,4-butanediyl) (CAS: 813452-37-8) and 1,3-di({α-[1-chloro-9-oxo-9H-thioxanethen-4-yl)oxy]acetylpoly[oxy(1-methylethylene)]}oxy)-2,2-bis({α-[1-chloro-9-oxo-9H-thioxanethen-4-yl)oxy]acetylpoly[oxy(1-methylethylene)]}oxymethyl)propane. Specific products thereof are not particularly limited, and examples thereof include ESACURE 1001M, ESACURE KIP 150, Omnipol TX, SpeedCure 7010, SpeedCure 7040, and Omnipol 910 (all products name, manufactured by IGM Resins B.V.). The mixture of 1,3-di({-4-(dimethylamino)benzoylpoly[oxy(1-methylethylene)]}oxy)-2,2-bis({-4-(dimethylamino)-benzoylpoly[oxy(1-methylethylene)]}oxymethyl)propane and {α-4-(dimethylamino)benzoylpoly(oxyethylene)-poly[oxy(1-methylethylene)]-poly(oxyethylene)}4-dimethylamino) benzoate and the polyethylene glycol di(β-4-[4-(2-dimethylamino-2-benzyl)butaonylphenyl]piperazine)propionate also have a function as a photosensitizer.

The content of the high-molecular-weight photoinitiator is preferably in a range of 1.0% to 10.0% by mass, more preferably in a range of 1.5% to 9.0% by mass, and still more preferably in a range of 2.0% to 8.0% by mass with respect to the total amount of the ink composition. When the content of the high-molecular-weight photoinitiator with respect to the total amount of the ink composition is in the above-described ranges, the odor of a recorded material to be obtained tends to be further reduced.

The content of the high-molecular-weight photoinitiator is preferably in a range of 15% to 100% by mass, more preferably in a range of 20% to 85% by mass, still more preferably in a range of 25% to 70% by mass, and even still more preferably in a range of 30% to 60% by mass with respect to the total amount of the photoinitiator. When the content of the high-molecular-weight photoinitiator with respect to the total amount of the photoinitiator is in the above-described ranges, the odor of a recorded material to be obtained tends to be further reduced, and the curing properties of the ink composition also tend to be maintained.

1.2.2. Low-molecular-weight photoinitiator

The ink composition of the present embodiment may contain a low-molecular-weight photoinitiator. When the ink composition contains a low-molecular-weight photoinitiator, the curing properties tend to be further improved. That is, when the ink composition of the present embodiment contains a high-molecular-weight photoinitiator and a low-molecular-weight photoinitiator, both the odor and the curing properties tend to be achieved.

The molecular weight of the low-molecular-weight photoinitiator is less than 500, preferably 50 or greater and less than 500, more preferably in a range of 100 to 450, still more preferably in a range of 200 to 450, even still more preferably in a range of 300 to 450, and even still more preferably in a range of 350 to 450. The low-molecular-weight photoinitiator is not particularly limited as long as the molecular weight thereof is less than 500, and examples thereof include an acylphosphine-based photoinitiator, an α-hydroxyketone-based photoinitiator, an amine-based photoinitiator, and a thioxanthone-based photoinitiator.

More specific examples of the low-molecular-weight photoinitiator include phenylbis(2,4,6-trimethylbenzoyl) phosphine oxide (CAS: 162881-26-7), 2-hydroxy-1-[4-(4-(2-hydroxy-2-methylpropionyl)phenoxy)-phenyl]-2-methylpropan-1-one (CAS: 71868-15-0), (methylimino)diethane-2,1-diyl bis[4-(dimethylamino)benzoate] (CAS: 925246-00-0), ethyl phenyl(2,4,6-trimethylbenzoyl)phosphinate, and 2,4-diethylthioxanthone. Specific products thereof are not particularly limited, and examples thereof include Omnirad 819, ESACURE KIP 160, ESACURE A198, Speedcure DETX, Omnirad TPO-L (all product names, manufactured by IGM Resins B.V.). The (methylamino)diethane-2,1-diyl bis[4-(dimethylimino)benzoate] also has a function as a photosensitizer.

The content of the low-molecular-weight photoinitiator is preferably in a range of 1.0% to 10.0% by mass, more preferably in a range of 1.5% to 9.0% by mass, and still more preferably in a range of 2.0% to 8.0% by mass with respect to the total amount of the ink composition. When the content of the low-molecular-weight photoinitiator with respect to the total amount of the ink composition is in the above-described ranges, the odor of a recorded material to be obtained tends to be further reduced.

The content of the low-molecular-weight photoinitiator is preferably in a range of 40% to 99% by mass, more preferably in a range of 45% to 90% by mass, still more preferably in a range of 50% to 80% by mass, and even still more preferably in a range of 55% to 70% by mass with respect to the total amount of the photoinitiator. When the content of the low-molecular-weight photoinitiator with respect to the total amount of the photoinitiator is in the above-described ranges, the odor of a recorded material to be obtained tends to be further reduced, and the curing properties of the ink composition also tend to be maintained.

1.3. Polymerization inhibitor

The ink composition of the present embodiment may contain a polymerization inhibitor. The polymerization inhibitor is not particularly limited, and examples thereof include hydroquinones such as hydroquinone, hydroquinone monomethyl ether (MEHQ), 1-o-2,3,5-trimethylhydroquinone, and 2-tert-butylhydroquinone, catechols such as catechol, 4-methylcatechol, and 4-tert-butylcatechol, phenols such as phenol, butyl hydroxytoluene, butyl hydroxy anisole, p-methoxyphenol, cresol, pyrogallol, 3,5-di-t-butyl-4-hydroxytoluene, 2,2-methylenebis(4-methyl-6-t-butylphenol, 2,2'-methylenebis(4-ethyl-6-butylphenol), and 4,4'-thiobis(3-methyl-6-t-butylphenol), and hindered amines such as a compound having a 2,2,6,6-tetramethylpiperidin-N-oxyl skeleton typified by 2,2,6,6-tetramethyl-4-hydroxypiperidin-1-oxyl, a compound having a 2,2,6,6-tetramethylpiperidine skeleton typified by bis(2,2,6,6-tetramethyl-4-piperidyl) sebacate, a compound having a 2,2,6,6-tetramethylpiperidine skeleton, a compound having a 2,2,6,6-tetramethylpiperidin-N-alkyl skeleton, and a compound having a 2,2,6,6-tetramethylpiperidin-N-acyl skeleton. The polymerization inhibitor may be used alone or in combination of two or more kinds thereof.
The content of the polymerization inhibitor is not particularly limited, but is, for example, in a range of 0.1% to 1.0% by mass with respect to the total amount of the ink composition.

1.4. Surfactant

The ink composition of the present embodiment may contain a surfactant. Examples of the surfactant include a silicone-based surfactant, a fluorine-based surfactant, and an acetylene glycol-based surfactant. Among these, a silicone-based surfactant is preferable. The surfactant may be used alone or in combination of two or more kinds thereof.
Examples of the silicone-based surfactant include a polysiloxane-based surfactant and a polyether-modified organosiloxane. A commercially available product of the silicone-based surfactant is not particularly limited, and specific examples thereof include BYK-306, BYK-307, BYK-333, BYK-341, BYK-345, BYK-346, BYK-347, BYK-348, BYK-349, and BYK-UV3500 (all trade names, manufactured by BYK-Chemie GmbH), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (all trade names, manufactured by Shin-Etsu Chemical Co., Ltd.).
The fluorine-based surfactant is not particularly limited, and examples thereof include a perfluoroalkyl sulfonate, a perfluoroalkyl carboxylate, perfluoroalkyl phosphoric acid ester, a perfluoroalkyl ethylene oxide adduct, perfluoroalkyl betaine, and a perfluoroalkylamine oxide compound. A commercially available product of the fluorine-based surfactant is not particularly limited, and examples thereof include S-144 and S-145 (manufactured by Asahi Glass Co., Ltd.), FC-170C, FC-430, FLUORAD FC-4430 (manufactured by 3M Japan Limited), FSO, FSO-100, FSN, FSN-100, and FS-300 (manufactured by Dupont), and FT-250 and 251 (manufactured by NEOS COMPANY LIMITED).
The acetylene glycol-based surfactant is not particularly limited, and preferred examples thereof include one or more selected from an alkylene oxide adduct of 2,4,7,9-tetramethyl-5-decyne-4,7-diol and 2,4,7,9-tetramethyl-5-decyne-4,7-diol and an alkylene oxide adduct of 2,4-dimethyl-5-decyne-4-ol and 2,4-dimethyl-5-decyne-4-ol. A commercially available product of the acetylene glycol-based surfactant is not particularly limited, and examples thereof include OLFINE 104 Series and E Series such as OLFINE E1010 (all trade names, manufactured by Air Products Japan, Inc.), SURFYNOL 465 and SURFYNOL 61 (both trade names, manufactured by Nissin Chemical Industry Co., Ltd.).
The content of the surfactant is not particularly limited, but is, for example, in a range of 0.1% to 5.0% by mass with respect to the total amount of the ink composition.

1.5. Coloring material

The ink composition of the present embodiment may contain a coloring material. Examples of the coloring material include dyes and pigments. The content of the coloring material is not particularly limited, but is, for example, in a range of 1% to 10% by mass with respect to the total amount of the ink composition. Further, the ink composition of the present embodiment may be a clear ink that does not contain a coloring material or contains a coloring material to an extent that coloring is not intended (for example, the content of the coloring material is 0.1% by mass or less). The coloring material may be used alone or in combination of two or more kinds thereof.

1.5.1. Pigment

The light resistance of the ink composition according to the present embodiment can be improved by using a pigment as a coloring material. Both an inorganic pigment and an organic pigment can also be used as the pigment.
Examples of the inorganic pigment include carbon blacks (C.I. (Colour Index Generic Name) Pigment Black 7) such as furnace black, lamp black, acetylene black, and channel black, iron oxide, and titanium oxide.
Examples of the organic pigment include an azo pigment such as an insoluble azo pigment, a condensed azo pigment, Azo Lake, or a chelate azo pigment, a polycyclic pigment such as a phthalocyanine pigment, a perylene pigment, a perinone pigment, an anthraquinone pigment, a quinacridone pigment, a dioxane pigment, a thioindigo pigment, an isoindolinone pigment, or a quinophthalone pigment, a chelate dye (such as a basic dye-type chelate or an acidic dye-type chelate), a lake dye (such as a basic dye-type lake or an acidic dye-type lake), a nitro pigment, a nitroso pigment, aniline black, and a daylight fluorescent pigment.

More specifically, examples of the carbon black used as a black color include No. 2300, No. 900, MCF88, No. 33, No. 40, No. 45, No. 52, MA7, MA8, MA100, and No. 2200B (all manufactured by Mitsubishi Chemical Corporation), Raven 5750, Raven 5250, Raven 5000, Raven 3500, Raven 1255, and Raven 700 (all manufactured by Columbia Carbon Co., Ltd.), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all manufactured by Cabot Japan K.K.), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa-Huls AG).

Examples of a pigment used as a white color include C.I. Pigment White 6, 18, and 21.

Examples of a pigment used as a yellow color include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 155, 167, 172, 180, and 185.

Examples of a pigment used as a magenta color include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, and 245, and C.I. Pigment Violet 19, 23, 32, 33, 36, 38, 43, and 50.

Examples of a pigment used as a cyan color include C.I. Pigment Blue 1, 2, 3, 15, 15:1, 15:2, 15:3, 15:34, 15:4, 16, 18, 22, 25, 60, 65, and 66, and C.I. Vat Blue 4 and 60.

Further, examples of pigments of colors other than magenta, cyan, and yellow include C.I. Pigment Green 7 and 10, C.I. Pigment Brown 3, 5, 25, and 26, and C.I. Pigment Orange 1, 2, 5, 7, 13, 14, 15, 16, 24, 34, 36, 38, 40, 43, and 63.

The content of the pigment is not particularly limited, but is, for example, in a range of 1% to 10% by mass with respect to the total amount of the ink composition.

1.5.2. Dispersing agent

When the ink composition of the present embodiment contains a pigment, the ink composition may contain a dispersing agent in order to improve the dispersibility of the pigment. The dispersing agent may be used alone or in combination of two or more kinds thereof.

The dispersing agent is not particularly limited, and examples thereof include dispersing agents that are commonly used to prepare a pigment dispersion liquid such as a polymer dispersing agent. Specific examples thereof include dispersing agents containing one or more of polyoxyalkylene polyalkylene polyamine, a vinyl-based polymer, a vinyl-based copolymer, an acrylic polymer, an acrylic copolymer, polyester, polyamide, polyimide, polyurethane, an amino-based polymer, a silicon-containing polymer, a sulfur-containing polymer, a fluorine-containing polymer, and an epoxy resin as main components.

Examples of a commercially available product of the polymer dispersing agent include AJISPER Series (manufactured by Ajinomoto Fine-Techno Co., Ltd.), SOLSPERSE Series (such as SOLSPERSE 36000 available from Avecia, Inc. and Noveon, Inc.), DISPERBYK Series (manufactured by BYK Additives & Instruments GmbH), and DISPARLON Series (manufactured by Kusumoto Chemicals, Ltd.).

The content of the dispersing agent is not particularly limited, but is, for example, in a range of 0.01% to 1.00% by mass with respect to the total amount of the ink composition.

1.5.3. Dye

The dye is not particularly limited, and examples thereof include an acidic dye, a direct dye, a reactive dye, and a basic dye. The dye is not particularly limited, and examples thereof include C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C.I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The content of the dye is not particularly limited, but is, for example, in a range of 1% to 10% by mass with respect to the total amount of the ink composition.

2. Method of producing radiation-curable ink jet ink composition

The radiation-curable ink jet ink composition of the present embodiment is not particularly limited, but may be obtained by, for example, mixing each of the above-described component. Alternatively, the radiation-curable ink jet ink composition may be obtained by preparing a coloring material dispersion liquid in which a coloring material and a dispersing agent are dispersant in a solvent and mixing the obtained coloring material dispersion liquid with each of the above-described other components. Further, in the radiation-curable ink jet ink composition, the solvent is not limited to the above-described polymerizable compounds.

3. Recording medium

The recording medium used for performing recording with the ink composition of the present embodiment is not particularly limited, and examples thereof include an absorbing recording medium, a low-absorbing recording medium, and a non-absorbing recording medium.

The absorbing recording medium is not particularly limited, and examples thereof include plain paper such as electrophotographic paper with high ink permeability, ink jet paper (paper for exclusive use for ink jet, provided with an ink absorbing layer formed of silica particles or alumina particles or an ink absorbing layer formed of a hydrophilic polymer such as polyvinyl alcohol (PVA) or polyvinylpyrrolidone (PVP), and cloth.

The low-absorbing recording medium is not particularly limited, and examples thereof include art paper, coated paper, and cast paper, which have relatively low ink permeability and are used for typical offset printing.

The non-absorbing recording medium is not particularly limited, and examples thereof include a film or plate made of plastics such as polyvinyl chloride, polyethylene, polypropylene, polyethylene terephthalate (PET), polycarbonate, polystyrene, and polyurethane, a plate made of metals such as iron, silver, copper, and aluminum, a metal plate produced by vapor deposition of various metals or a film made of plastic, a plate formed of an alloy such as stainless steel or brass, and a recording medium obtained by adhesion (coating) of a film made of plastics such as polyvinyl chloride, polyethylene, polypropylene, polyethylene terephthalate (PET), polycarbonate, polystyrene, and polyurethane to a base material made of paper.

The ink composition of the present embodiment is suitably used for printing on the low-absorbing recording medium or the non-absorbing recording medium. The ink composition of the present embodiment is suitably used particularly for printing on a recording medium such as a soft packaging or a shrink label which is a non-absorbing recording medium that is contracted when heated.

4. Recording device

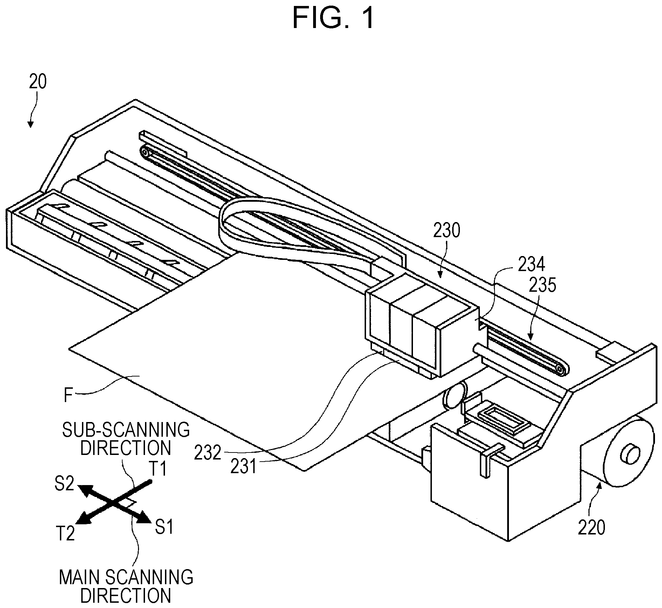

The recording device of the present embodiment is an inkjet recording device used for performing printing with the ink composition of the present embodiment. FIG. 1 is a perspective view showing a serial printer as an example of an ink jet recording device. As shown in FIG. 1, a serial printer 20 includes a transport unit 220 and a recording unit 230. The transport unit 220 transports a recording medium F supplied to the serial printer to the recording unit 230 and discharges the recording medium after recording to the outside of the serial printer. Specifically, the transport unit 220 has feeding rollers and transports the sent recording medium F in a sub-scanning direction T2.

Further, the recording unit 230 includes an ink jet head 231 that jets an ink or the like to the recording medium F sent from the transport unit 220, a light source 232 that irradiates the adhering ink or the like with radiation, a carriage 234 on which these units are mounted, and a carriage movement mechanism 235 that moves the carriage 234 in main scanning directions S1 and S2 of the recording medium F.

In a case of the serial printer, the serial printer includes, as the ink jet head 231, a head having a length less than the width of the recording medium and performs recording by the movement of the head in a plurality of passes. Further, in the serial printer, the head 231 is mounted on the carriage 234 that moves in a predetermined direction so that the ink composition is jetted onto the recording medium F by the movement of the head in conjunction with the movement of the carriage. In this manner, the recording is performed by the movement of the head in two or more passes. Further, the pass is also referred to as main scanning. Sub-scanning of transporting the recording medium is performed between the passes. That is, the main scanning and the sub-scanning are alternately performed.

Further, the recording device of the present embodiment has been described above using the serial printer as an example with reference to FIG. 1, but the recording device of the present embodiment may be a line printer. In the line printer, an image is recorded on a recording medium by fixing a line head, moving the recording medium in a sub-scanning direction (the longitudinal direction and the transport direction of the recording medium), and jetting ink droplets from a nozzle opening of the head in conjunction with the movement. Typically, the head is fixed and does not move in the line printer, and thus recording is performed in one pass (single pass). Therefore, the line printer has an advantage over the serial printer in terms that the recording speed is higher.

5. Ink jet recording method

An ink jet recording method of the present embodiment includes a jetting step of jetting the ink composition of the present embodiment onto a recording medium. Further, the ink jet recording method may include a curing step of curing the ink composition of the present embodiment that has adhered to the recording medium in the jetting step, a transport step of transporting the recording medium, and a winding step of winding up the recording medium as necessary.

5.1. Jetting step

In the jetting step of the present embodiment, the ink composition of the present embodiment is jetted onto the recording medium from the ink jet head. More specifically, a pressure generating unit provided in the ink jet head is driven to jet the ink composition filling a pressure generating chamber of the ink jet head onto the recording medium from the nozzle.
Examples of the ink jet head used in the jetting step include a line head that performs recording according to a line system and a serial head that performs recording according to a serial system.
In the line system using a line head, for example, an ink jet head having a width greater than or equal to the recording width of a recording medium is fixed to a recording device. Further, an image is recorded on the recording medium by moving the recording medium in the sub-scanning direction (the transport direction of the recording medium) and jetting ink droplets from the nozzle of the ink jet head in conjunction with the movement.
In the serial system using a serial head, for example, an ink jet head is mounted on a carriage that is movable in the width direction of a recording medium. Further, an image is recorded on the recording medium by moving the carriage in the main scanning direction (the width direction of the recording medium) and jetting ink droplets from the nozzle of the ink jet head in conjunction with the movement.
The thickness of the ink film formed on the recording medium in the jetting step is preferably 5 $\mu$m or less and more preferably in a range of 1 to 5 $\mu$m. When the thickness of the ink film is in the above-described ranges, the shrink properties of the ink composition, the adhesiveness of the ink composition to the recording medium, and the curing properties of the ink composition tend to be improved.

5.2. Curing step

The inkjet recording method of the present embodiment may include a curing step of curing the ink composition of the present embodiment that has adhered to the recording medium in the jetting step. In the curing step, the ink composition of the present embodiment that has adhered to the recording medium is irradiated with radiation, to cure the ink composition of the present embodiment. When the ink composition is irradiated with radiation, the polymerization reaction of the polymerizable compound is started to cure the composition so that a coating film is formed. Here, when a photoinitiator is present, an active species (initiation species) such as a radical, an acid, or a base is generated, and the polymerization reaction of the polymerizable compound is promoted by the function of the initiation species.
Here, examples of the radiation include ultraviolet rays, infrared rays, visible light, and X-rays. The composition is irradiated with radiation by a radiation source provided downstream of the ink jet head. The radiation source is not particularly limited, and examples thereof include a UV-LED. When such a radiation source is used, miniaturization of the device and cost reduction can be realized. The UV-LED serving as an ultraviolet ray source is small and thus can be installed in the ink jet recording device.

5.3. Transport step

The ink jet recording method of the present embodiment may include a transport step of transporting the recording medium. In the transport step, the recording medium is transported in a predetermined direction inside the recording device. More specifically, the recording medium is transported from a paper feeding unit to a paper discharge unit of the recording device using a transport roller or a transport belt provided inside the recording device. In the transport process, the ink composition jetted from the inkjet head adheres to the recording medium to form a recorded material.

5.4. Winding step

The ink jet recording method of the present embodiment may include a winding step of winding the recording medium. In the winding step, for example, the recording medium to which the ink composition of the present embodiment has been jetted is wound up.
The recorded materials can be more efficiently stored by performing the winding step. Further, the recorded materials overlap each other under greater pressure by performing the winding step. Therefore, the blocking problem is likely to occur. In this regard, since the ink composition of the present embodiment has excellent blocking resistance, the blocking problem is unlikely to occur, and thus the effects of the disclosure of the present application are more apparent.

In the ink jet recording method of the present embodiment, the order and the timing of performing the jetting step, the curing step, the transport step, and the winding step are not particularly limited, and for example, the four steps may be performed simultaneously or alternately. Further, some of these steps may be performed simultaneously, and the remaining step may be performed separately.

Examples

Hereinafter, the present disclosure will be described in more detail based on examples and comparative examples. The present disclosure is not limited to the following examples. Further, the experiments of the examples and the comparative examples were performed at room temperature (25°C) and 1 atm unless otherwise specified.

1. Preparation of radiation-curable ink jet ink composition

First, a part of a coloring material, a dispersing agent, and each polymerizable compound was weighed and added to a tank for pigment dispersion, a ceramic bead mill having a diameter of 1 mm was added to the tank, and the mixture was stirred, thereby obtaining a pigment dispersion liquid in which the coloring material had been dispersed in the polymerizable compound. Next, the remaining components were added to a tank for a mixture which was a stainless steel container so that the composition listed in Tables 2 to 5 was obtained, the mixture was mixed and stirred for complete dissolution, the pigment dispersion liquid obtained in the above-described manner was poured into the mixture, and the solution was further mixed and stirred at room temperature and filtered through a membrane filter, thereby obtaining an ink composition of each example. Further, the numerical value of each component shown in each example in the figure denotes the content of the component in units of % by mass unless otherwise specified. Further, the mass percentage of a substance in a solid state at room temperature denotes the solid content concentration. Further, each component in the tables is as follows.

· MEHQ (trade name, "p-methoxyphenol", manufactured by Kanto Chemical Co., Inc., hydroquinone monomethyl ether)

· LA-7RD (manufactured by ADEKA Corporation, 2,2,6,6-tetramethyl-4-hydroxypiperidin-1-oxyl) · Omnirad 819 (manufactured by IGM Resins B.V., acylphosphine-based photoinitiator, phenylbis(2,4,6-trimethylbenzoyl)phosphine oxide)

· ESACURE KIP 160 (manufactured by IGM Resins B.V., α-hydroxyketone-based photoinitiator, 2-hydroxy-1-[4-(4-(2-hydroxy-2-methylpropionyl)phenoxy)-phenyl]-2-methylpropan-1-one)

· ESACURE A198 (manufactured by IGM Resins B.V., amine-based photoinitiator, (methylimino)diethane-2,1-diyl bis [4-(dimethylamino)benzoate])

· SpeedCure DETX (manufactured by IGM Resins B.V., thioxanthone-based photoinitiator, 2,4-diethylthioxanthone)

· ESACURE 1001M (manufactured by IGM Resins B.V., ketosulfonic acid-based photoinitiator, 1-[4-(4-benzoylphenylsulfanyl)phenyl]2-methyl-2-[(4-methylphenyl)sulfonyl]-1-propan-1-one)

· ESACURE KIP 150 (manufactured by IGM Resins B.V., α-hydroxyketone-based photoinitiator, oligo-[2-hydroxy-2-methyl-1-(4-(1-methylvinyl)phenyl)propanone])

· SpeedCure 7010 (manufactured by IGM Resins B.V., thioxanthone-based photoinitiator, 1,3-di({α-[1-chloro-9-oxo-9H-thioxanthen-4-yl]oxy}acetylpoly[oxy(1-methylethylene)]}oxy-2,2-bis({α-[1-chloro-9-oxo-9H-thioxanthen-4-yl]oxy}acetylpoly[oxy(1-methylethylene)]}oxymethyl)propane)

· Omnipol TX (manufactured by IGM Resins B.V., thioxanthone-based photoinitiator, α-[2-[(9-oxo-9H-thioxanthenyl) oxy]acetyl]-ω-[[2-[(9-oxo-9H-thioxanthenyl)oxy]acetyl]oxy]poly(oxy-1,4-butanediyl))

· Omnipol 910 (manufactured by IGM Resins B.V., amine-based photoinitiator, polyethylene glycol di(β-4-[4-(2-dimethylamino-2-benzyl)butaonylphenyl]piperazine)propionate)

· SpeedCure 7040 (manufactured by IGM Resins B.V., amine-based photoinitiator, mixture of 1,3-di({-4-(dimethylamino)benzoylpoly[oxy(1-methylethylene)]}oxy)-2,2-bis({-4-(dimethylamino)-benzoylpoly[oxy(1-methylethylene)]}oxymethyl)propane and {α-4-(dimethylamino)benzoylpoly(oxyethylene)-poly[oxy(1-methylethylene)]-poly(oxyethylene)}4-dimethylamino)benzoate)

· BYK-UV3500 (manufactured by BYK Additives & Instruments GmbH, polyether-modified polydimethylsiloxane containing acryloyl group)

· SOLSPERSE 36000 (manufactured by Avecia)

· Carbon black (trade name "MA-100", manufactured by Mitsubishi Chemical Corporation)

2. Preparation of recorded material

A solid pattern image formed of an ink film having a thickness of 5 μm was recorded by jetting the radiation-curable ink jet ink composition of each example onto a PET film "BONSET" (product name, manufactured by C.I. TAKIRON Corporation) serving as a recording medium using an ink jet printer "PX-G5000" (product name, manufactured by Seiko Epson Corporation) in an environment of room temperature at 1 atm under conditions of a recording resolution of 600 dpi × 600 dpi and a liquid droplet weight of 10 ng. Further, the solid pattern image is an image obtained by recording dots with respect to all pixels which are minimum recording unit areas defined by the recording resolution, that is, an image recorded at a dot generation ratio of 100%. The image was irradiated with ultraviolet rays from a UV-LED light source mounted on the carriage while the above-described printing was performed, thereby obtaining a recorded material in which an ink cured film having a film thickness of 5 μm was formed on the recording medium.

3. Evaluation method

3.1. Curing properties

A PET film was coated with the radiation-curable ink jet ink composition of each example using a bar coater such that the thickness of the ink cured film reached 5 μm. The irradiation was performed using a UV-LED (peak wavelength of 395 nm or 365 nm, irradiation intensity of 1000 mW/cm$^2$), and the irradiation energy applied until the ink cured film entered a tack-free state was determined. The irradiation intensity [mW/cm$^2$] of the light applied from the light source to the surface irradiated with light was measured and the irradiation energy [mJ/cm$^2$] was determined from the product of the obtained irradiation intensity [mW/cm$^2$] and the irradiation duration [s].

Further, the state where the ink cured film entered a tack-free state was determined under the following conditions. That is, the state was determined based on whether or not the radiation-curable ink jet ink composition adhered to cotton swabs or the ink cured film on the recording medium was scratched. Here, Johnson's Cotton Swabs (manufactured by Johnson & Johnson) were used as the cotton swabs. The number of times of rubbing the surface was set to 10 times of reciprocation, and the rubbing intensity was set to a load of 100 g.

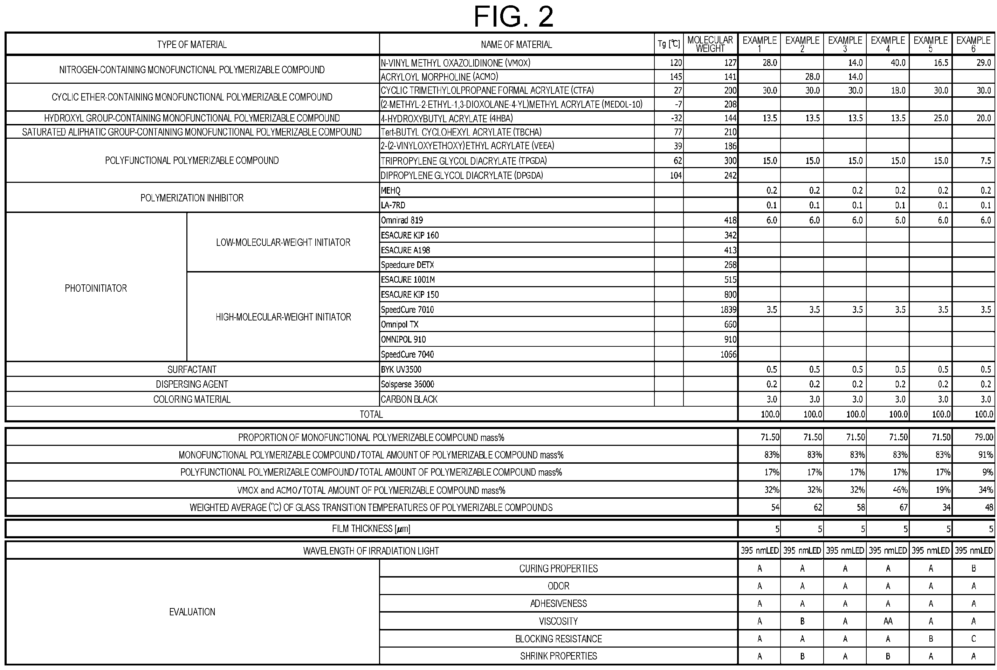

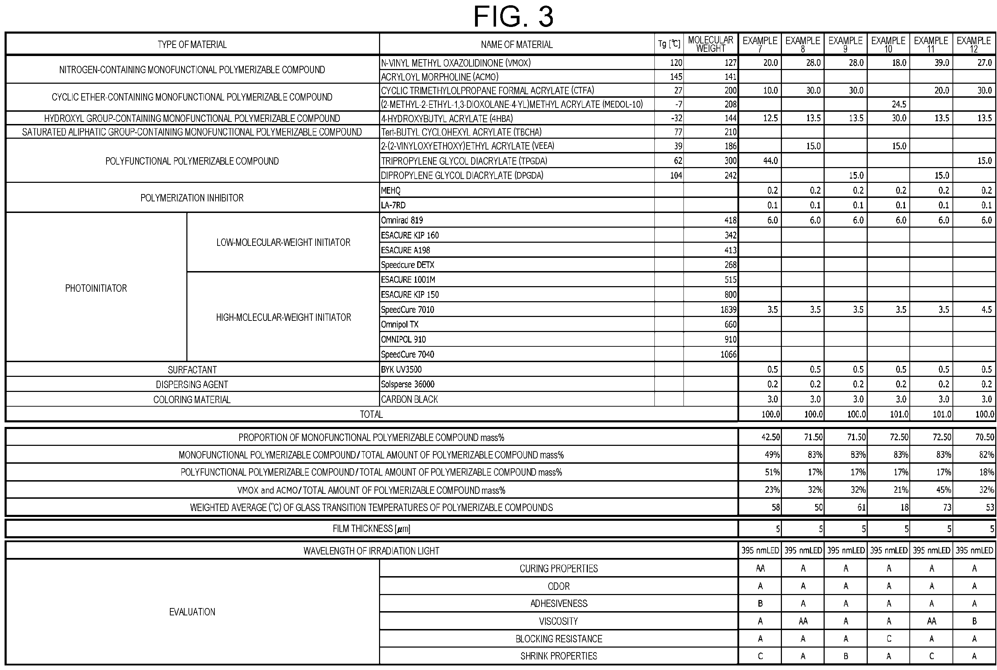

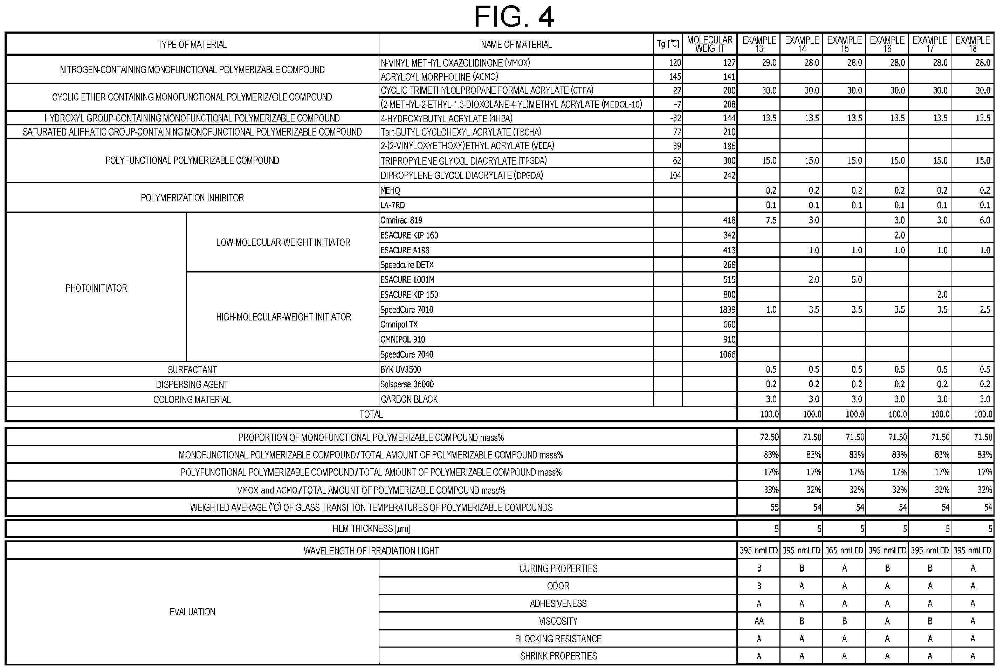

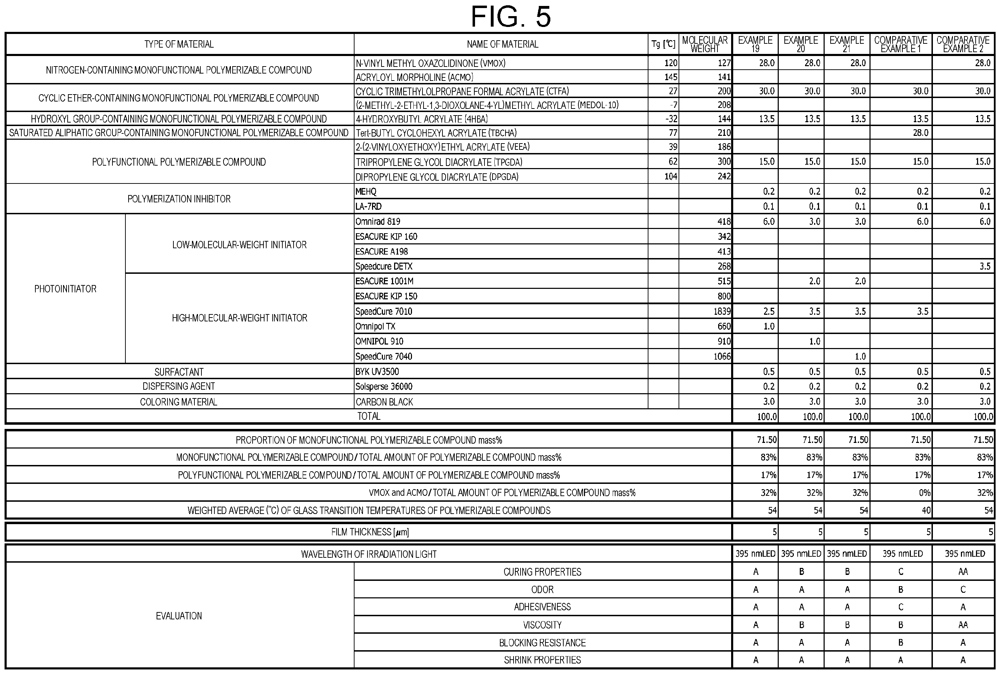

The curing properties were evaluated according to the following evaluation criteria based on the irradiation energy when the ink cured film entered a tack-free state. The rank of B or higher was determined as a satisfactory level. The evaluation results are shown in FIGS. 2 to 5.

[Evaluation criteria]

AA: The energy in the tack-free state was less than 150 mJ/cm$^2$.
A: The energy in the tack-free state was 150 mJ/cm$^2$ or greater and less than 250 mJ/cm$^2$.
B: The energy in the tack-free state was 250 mJ/cm$^2$ or greater and less than 350 mJ/cm$^2$.
C: The energy in the tack-free state was 350 mJ/cm$^2$ or greater.

3.2. Odor

The odor of the ink cured film of the recorded material obtained by the above-described preparation method was smelled and evaluated according to the following criteria. The rank of A or higher was determined as a satisfactory level. The evaluation results are shown in FIGS. 2 to 5.

[Evaluation criteria]

A: There was no odor or there was a slight odor.
B: There was an odor.
C: There was a strong odor.

3.3. Adhesiveness

The adhesiveness of the ink cured film obtained by the evaluation of the curing properties was evaluated by performing a cross-cut test in conformity with the method described in JIS K 5600-5-6. Specifically, the ink cured film of the obtained recorded material was cut into a lattice shape, transparent adhesive tape was attached to the cut lattice portion, and the tape was sufficiently rubbed with a finger to be closely attached to the ink cured film such that the ink cured film could see through the tape. Next, within 5 minutes after the adhesion of the tape, the tape was peeled from the ink cured film at an angle of about 60° in 0.5 to 1.0 seconds. At this time, the presence or absence of peeling of the ink cured film from the recording medium was evaluated according to the following evaluation criteria. The rank of B or higher was evaluated as a satisfactory level. The evaluation results are shown in FIGS. 2 to 5.

[Evaluation criteria]

A: Peeling of the ink cured film was observed in less than 20% of the lattice portion.
B: Peeling of the ink cured film was observed in 20% or greater and less than 30% of the lattice portion.
C: Peeling of the ink cured film was observed in 30% or greater of the lattice portion.

3.4. Viscosity

The viscosity of the ink composition of each example and each comparative example immediately after the preparation was measured in conformity with JIS Z 8803 in an environment of 20°C using a rotational viscometer (product name, "Rheometer MCR-301", manufactured by Anton Paar GmbH). The evaluation results are shown in FIGS. 2 to 5.

(Evaluation criteria)

AA: The viscosity was less than 15 mPa·s.
A: The viscosity was 15 mPa·s or greater and less than 25 mPa·s.
B: The viscosity was 25 mPa·s or greater.

3.5. Blocking resistance

The recorded material obtained by the above-described preparation method was rolled up such that the ink cured film was on the inside to be processed in a cylindrical shape. The recorded material was disposed around a glass bottle which was a packaged material preheated in a constant temperature bath, and the glass bottle and the cylindrical recorded material disposed around the glass bottle were allowed to stand in a constant temperature bath at 90°C for 10 seconds so that the cylindrical recorded material was contracted and closely attached to the glass bottle.
The glass bottle to which the recorded material was closely attached was visually observed on whether or not the trace of the attachment of the ink cured film to the side surface of the glass bottle was transferred, and the blocking resistance was evaluated based on the following evaluation criteria. The evaluation results are shown in FIGS. 2 to 5.

[Evaluation criteria]

A: The trace of the attachment of the ink cured film to the glass bottle was not found.
B: The trace of the ink cured film to the glass bottle slightly remained.
C: The trace of the attachment of the ink cured film to the glass bottle was found (peeling of the ink cured film from the recording medium was found).

3.6. Shrink properties

In the recorded material recorded using the ink composition having blocking resistance, the state of wrinkles formed after the contraction was visually observed, and the shrink properties were evaluated based on the following evaluation criteria. The evaluation results are shown in FIGS. 2 to 5.

[Evaluation criteria]

19

A: Wrinkles were not found in the ink cured film.
B: A small amount of wrinkles were found in the ink cured film.
C: Large wrinkles were found in the ink cured film.

**Claims**

1. A radiation-curable ink jet ink composition comprising:

   a nitrogen-containing monofunctional polymerizable compound; and
   a photoinitiator,
   wherein the nitrogen-containing monofunctional polymerizable compound includes N-vinyl methyl oxazolidinone, and
   the photoinitiator includes a high-molecular-weight photoinitiator having a molecular weight of 500 or greater.

2. The radiation-curable ink jet ink composition according to claim 1,
   wherein the high-molecular-weight photoinitiator includes any one or more of a thioxanthone-based initiator, an $\alpha$-hydroxyketone-based initiator, a ketosulfonic acid-based initiator, and an amine-based initiator.

3. The radiation-curable ink jet ink composition according to claim 1,
   wherein the photoinitiator includes a low-molecular-weight photoinitiator having a molecular weight of less than 500.

4. The radiation-curable ink jet ink composition according to claim 1,
   wherein a content of the high-molecular-weight photoinitiator is in a range of 15% to 100% by mass with respect to a total amount of the photoinitiator.

5. The radiation-curable ink jet ink composition according to claim 1,
   wherein the high-molecular-weight photoinitiator includes any one or more of 1-[4-(4-benzoylphenylsulfanyl)phenyl]-2-methyl-2-[(4-methylphenyl)sulfonyl]-1-propan-1-one, oligo-[2-hydroxy-2-methyl-1-(4-(1-methylvinyl)phenyl) propanone, $\alpha$-[2-[(9-oxo-9H-thioxanthenyl)oxy]acetyl]-$\omega$-[[2-[(9-oxo-9H-thioxanthenyl)oxy]acetyl)oxy]poly(oxy-1,4-butanediyl), 1,3-di({$\alpha$-[1-chloro-9-oxo-9H-thioxanthen-4-yl]oxy]acetylpoly[oxy(1-methylethylene)]}oxy)-2,2-bis({$\alpha$-[1-chloro-9-oxo-9H-thioxanthen-4-yl)oxy]acetylpoly[oxy(1-methylethylene)]}oxymethyl]propane, a mixture of 1,3-di({-4-(dimethylamino)benzoylpoly[oxy(1-methylethylene)]}oxy)-2,2-bis({-4-(dimethylamino)-benzoylpoly [oxy(1-methylethylene)]}oxymethyl)propane and {$\alpha$-4-(dimethylamino)benzoylpoly(oxyethylene)-poly[oxy(1-methylethylene)]-poly(oxyethylene}4-dimethylamino)benzoate, and polyethylene glycol di($\beta$-4-[4-(2-dimethylamino-2-benzyl)butaonylphenyl]piperazine)propionate.

6. The radiation-curable ink jet ink composition according to claim 3,
   wherein the low-molecular-weight photoinitiator includes any one or more of phenylbis(2,4,6-trimethylbenzoyl) phosphine oxide, 2-hydroxy-1-[4-(4-(2-hydroxy-2-methylpropionyl)phenoxy)-phenyl]-2-methylpropan-1-one, (methylimino)diethane-2,1-diyl bis[4-(dimethylamino)benzoate], ethyl phenyl(2,4,6-trimethylbenzoyl)phosphinate, and 2,4-diethylthioxanthone.

7. The radiation-curable ink jet ink composition according to claim 1, further comprising:
   a cyclic ether-containing monofunctional polymerizable compound.

8. The radiation-curable ink jet ink composition according to claim 1, further comprising:
   a hydroxyl group-containing polymerizable compound.

9. The radiation-curable ink jet ink composition according to claim 1,
   wherein a weighted average of glass transition temperatures of polymerizable compounds contained in the ink jet ink composition is in a range of 20°C to 70°C.

10. The radiation-curable ink jet ink composition according to claim 1,
    wherein a total amount of monofunctional polymerizable compounds contained in the ink jet ink composition is 50% by mass or greater with respect to a total amount of polymerizable compounds contained in the ink jet ink composition.

# FIG. 1

## FIG. 2

| TYPE OF MATERIAL | NAME OF MATERIAL | Tg [°C] | MOLECULAR WEIGHT | EXAMPLE 1 | EXAMPLE 2 | EXAMPLE 3 | EXAMPLE 4 | EXAMPLE 5 | EXAMPLE 6 |
|---|---|---|---|---|---|---|---|---|---|
| NITROGEN-CONTAINING MONOFUNCTIONAL POLYMERIZABLE COMPOUND | N-VINYL METHYL OXAZOLIDINONE (VMOX) | 120 | 127 | 28.0 | | 14.0 | 40.0 | 16.5 | 29.0 |
| | ACRYLOYL MORPHOLINE (ACMO) | 145 | 141 | | 28.0 | 14.0 | | | |
| CYCLIC ETHER-CONTAINING MONOFUNCTIONAL POLYMERIZABLE COMPOUND | CYCLIC TRIMETHYLOLPROPANE FORMAL ACRYLATE (CTFA) | 27 | 200 | 30.0 | 30.0 | 30.0 | 18.0 | 30.0 | 30.0 |
| | (2-METHYL-2-ETHYL-1,3-DIOXOLANE-4-YL)METHYL ACRYLATE (MEDOL-10) | -7 | 208 | | | | | | |
| HYDROXYL GROUP-CONTAINING MONOFUNCTIONAL POLYMERIZABLE COMPOUND | 4-HYDROXYBUTYL ACRYLATE (4HBA) | -32 | 144 | 13.5 | 13.5 | 13.5 | 13.5 | 25.0 | 20.0 |
| SATURATED ALIPHATIC GROUP-CONTAINING MONOFUNCTIONAL POLYMERIZABLE COMPOUND | Tert-BUTYL CYCLOHEXYL ACRYLATE (TBCHA) | 77 | 210 | | | | | | |
| POLYFUNCTIONAL POLYMERIZABLE COMPOUND | 2-(2-VINYLOXYETHOXY)ETHYL ACRYLATE (VEEA) | 39 | 186 | | | | | | |
| | TRIPROPYLENE GLYCOL DIACRYLATE (TPGDA) | 62 | 300 | 15.0 | 15.0 | 15.0 | 15.0 | 15.0 | 7.5 |
| | DIPROPYLENE GLYCOL DIACRYLATE (DPGDA) | 104 | 242 | | | | | | |
| POLYMERIZATION INHIBITOR | MEHQ | | | 0.2 | 0.2 | 0.2 | 0.2 | 0.2 | 0.2 |
| | LA-7RD | | | 0.1 | 0.1 | 0.1 | 0.1 | 0.1 | 0.1 |
| PHOTOINITIATOR — LOW-MOLECULAR-WEIGHT INITIATOR | Omnirad 819 | | 418 | 6.0 | 6.0 | 6.0 | 6.0 | 6.0 | 6.0 |
| | ESACURE KIP 160 | | 342 | | | | | | |
| | ESACURE A198 | | 413 | | | | | | |
| | Speedcure DETX | | 268 | | | | | | |
| PHOTOINITIATOR — HIGH-MOLECULAR-WEIGHT INITIATOR | ESACURE 1001M | | 515 | | | | | | |
| | ESACURE KIP 150 | | 800 | | | | | | |
| | SpeedCure 7010 | | 1839 | 3.5 | 3.5 | 3.5 | 3.5 | 3.5 | 3.5 |
| | Omnipol TX | | 660 | | | | | | |
| | OMNIPOL 910 | | 910 | | | | | | |
| | SpeedCure 7040 | | 1066 | | | | | | |
| SURFACTANT | BYK UV3500 | | | 0.5 | 0.5 | 0.5 | 0.5 | 0.5 | 0.5 |
| DISPERSING AGENT | Solsperse 36000 | | | 0.2 | 0.2 | 0.2 | 0.2 | 0.2 | 0.2 |
| COLORING MATERIAL | CARBON BLACK | | | 3.0 | 3.0 | 3.0 | 3.0 | 3.0 | 3.0 |
| TOTAL | | | | 100.0 | 100.0 | 100.0 | 100.0 | 100.0 | 100.0 |

| | EXAMPLE 1 | EXAMPLE 2 | EXAMPLE 3 | EXAMPLE 4 | EXAMPLE 5 | EXAMPLE 6 |
|---|---|---|---|---|---|---|
| PROPORTION OF MONOFUNCTIONAL POLYMERIZABLE COMPOUND mass% | 71.50 | 71.50 | 71.50 | 71.50 | 71.50 | 79.00 |
| MONOFUNCTIONAL POLYMERIZABLE COMPOUND / TOTAL AMOUNT OF POLYMERIZABLE COMPOUND mass% | 83% | 83% | 83% | 83% | 83% | 91% |
| POLYFUNCTIONAL POLYMERIZABLE COMPOUND / TOTAL AMOUNT OF POLYMERIZABLE COMPOUND mass% | 17% | 17% | 17% | 17% | 17% | 9% |
| VMOX and ACMO / TOTAL AMOUNT OF POLYMERIZABLE COMPOUND mass% | 32% | 32% | 32% | 46% | 19% | 34% |
| WEIGHTED AVERAGE (°C) OF GLASS TRANSITION TEMPERATURES OF POLYMERIZABLE COMPOUNDS | 54 | 62 | 58 | 67 | 34 | 48 |

| FILM THICKNESS [μm] | 5 | 5 | 5 | 5 | 5 | 5 |
|---|---|---|---|---|---|---|
| WAVELENGTH OF IRRADIATION LIGHT | 395 nmLED | 395 nmLED | 395 nmLED | 395 nmLED | 395 nmLED | 395 nmLED |

| EVALUATION | | EXAMPLE 1 | EXAMPLE 2 | EXAMPLE 3 | EXAMPLE 4 | EXAMPLE 5 | EXAMPLE 6 |
|---|---|---|---|---|---|---|---|
| | CURING PROPERTIES | A | A | A | A | A | B |
| | ODOR | A | A | A | A | A | A |
| | ADHESIVENESS | A | A | A | A | A | A |
| | VISCOSITY | A | B | A | AA | A | A |
| | BLOCKING RESISTANCE | A | A | A | A | B | C |
| | SHRINK PROPERTIES | A | B | A | B | A | A |

# FIG. 3

| TYPE OF MATERIAL | | NAME OF MATERIAL | Tg [℃] | MOLECULAR WEIGHT | EXAMPLE 7 | EXAMPLE 8 | EXAMPLE 9 | EXAMPLE 10 | EXAMPLE 11 | EXAMPLE 12 |
|---|---|---|---|---|---|---|---|---|---|---|
| NITROGEN-CONTAINING MONOFUNCTIONAL POLYMERIZABLE COMPOUND | | N-VINYL METHYL OXAZOLIDINONE (VMOX) | 120 | 127 | 20.0 | 28.0 | 28.0 | 18.0 | 39.0 | 27.0 |
| | | ACRYLOYL MORPHOLINE (ACMO) | 145 | 141 | | | | | | |
| CYCLIC ETHER-CONTAINING MONOFUNCTIONAL POLYMERIZABLE COMPOUND | | CYCLIC TRIMETHYLOLPROPANE FORMAL ACRYLATE (CTFA) | 27 | 200 | 10.0 | 30.0 | 30.0 | | 20.0 | 30.0 |
| | | (2-METHYL-2-ETHYL-1,3-DIOXOLANE-4-YL)METHYL ACRYLATE (MEDOL-10) | -7 | 208 | | | | 24.5 | | |
| HYDROXYL GROUP-CONTAINING MONOFUNCTIONAL POLYMERIZABLE COMPOUND | | 4-HYDROXYBUTYL ACRYLATE (4HBA) | -32 | 144 | 12.5 | 13.5 | 13.5 | 30.0 | 13.5 | 13.5 |
| SATURATED ALIPHATIC GROUP-CONTAINING MONOFUNCTIONAL POLYMERIZABLE COMPOUND | | Tert-BUTYL CYCLOHEXYL ACRYLATE (TBCHA) | 77 | 210 | | | | | | |
| POLYFUNCTIONAL POLYMERIZABLE COMPOUND | | 2-(2-VINYLOXYETHOXY)ETHYL ACRYLATE (VEEA) | 39 | 186 | | 15.0 | | 15.0 | | |
| | | TRIPROPYLENE GLYCOL DIACRYLATE (TPGDA) | 62 | 300 | 44.0 | | | | | 15.0 |
| | | DIPROPYLENE GLYCOL DIACRYLATE (DPGDA) | 104 | 242 | | | 15.0 | | 15.0 | |
| POLYMERIZATION INHIBITOR | | MEHQ | | | 0.2 | 0.2 | 0.2 | 0.2 | 0.2 | 0.2 |
| | | LA-7RD | | | 0.1 | 0.1 | 0.1 | 0.1 | 0.1 | 0.1 |
| PHOTOINITIATOR | LOW-MOLECULAR-WEIGHT INITIATOR | Omnirad 819 | | 418 | 6.0 | 6.0 | 6.0 | 6.0 | 6.0 | 6.0 |
| | | ESACURE KIP 160 | | 342 | | | | | | |
| | | ESACURE A198 | | 413 | | | | | | |
| | | Speedcure DETX | | 268 | | | | | | |
| | HIGH-MOLECULAR-WEIGHT INITIATOR | ESACURE 1001M | | 515 | | | | | | |
| | | ESACURE KIP 150 | | 800 | | | | | | |
| | | SpeedCure 7010 | | 1839 | 3.5 | 3.5 | 3.5 | 3.5 | 3.5 | 4.5 |
| | | Omnipol TX | | 660 | | | | | | |
| | | OMNIPOL 910 | | 910 | | | | | | |
| | | SpeedCure 7040 | | 1066 | | | | | | |
| SURFACTANT | | BYK UV3500 | | | 0.5 | 0.5 | 0.5 | 0.5 | 0.5 | 0.5 |
| DISPERSING AGENT | | Solsperse 36000 | | | 0.2 | 0.2 | 0.2 | 0.2 | 0.2 | 0.2 |
| COLORING MATERIAL | | CARBON BLACK | | | 3.0 | 3.0 | 3.0 | 3.0 | 3.0 | 3.0 |
| TOTAL | | | | | 100.0 | 100.0 | 100.0 | 101.0 | 101.0 | 100.0 |

| | EXAMPLE 7 | EXAMPLE 8 | EXAMPLE 9 | EXAMPLE 10 | EXAMPLE 11 | EXAMPLE 12 |
|---|---|---|---|---|---|---|
| PROPORTION OF MONOFUNCTIONAL POLYMERIZABLE COMPOUND mass% | 42.50 | 71.50 | 71.50 | 72.50 | 72.50 | 70.50 |
| MONOFUNCTIONAL POLYMERIZABLE COMPOUND / TOTAL AMOUNT OF POLYMERIZABLE COMPOUND mass% | 49% | 83% | 83% | 83% | 83% | 82% |
| POLYFUNCTIONAL POLYMERIZABLE COMPOUND / TOTAL AMOUNT OF POLYMERIZABLE COMPOUND mass% | 51% | 17% | 17% | 17% | 17% | 18% |
| VMOX and ACMO / TOTAL AMOUNT OF POLYMERIZABLE COMPOUND mass% | 23% | 32% | 32% | 21% | 45% | 32% |
| WEIGHTED AVERAGE (℃) OF GLASS TRANSITION TEMPERATURES OF POLYMERIZABLE COMPOUNDS | 58 | 50 | 61 | 18 | 73 | 53 |

| FILM THICKNESS [μm] | 5 | 5 | 5 | 5 | 5 | 5 |
|---|---|---|---|---|---|---|

| WAVELENGTH OF IRRADIATION LIGHT | 395 nmLED | 395 nmLED | 395 nmLED | 395 nmLED | 395 nmLED | 395 nmLED |
|---|---|---|---|---|---|---|

| EVALUATION | | EXAMPLE 7 | EXAMPLE 8 | EXAMPLE 9 | EXAMPLE 10 | EXAMPLE 11 | EXAMPLE 12 |
|---|---|---|---|---|---|---|---|
| | CURING PROPERTIES | AA | A | A | A | A | A |
| | ODOR | A | A | A | A | A | A |
| | ADHESIVENESS | B | A | A | A | A | A |
| | VISCOSITY | A | AA | A | A | AA | B |
| | BLOCKING RESISTANCE | A | A | A | C | A | A |
| | SHRINK PROPERTIES | C | A | B | A | C | A |

## FIG. 4

| TYPE OF MATERIAL | NAME OF MATERIAL | Tg [℃] | MOLECULAR WEIGHT | EXAMPLE 13 | EXAMPLE 14 | EXAMPLE 15 | EXAMPLE 16 | EXAMPLE 17 | EXAMPLE 18 |
|---|---|---|---|---|---|---|---|---|---|
| NITROGEN-CONTAINING MONOFUNCTIONAL POLYMERIZABLE COMPOUND | N-VINYL METHYL OXAZOLIDINONE (VMOX) | 120 | 127 | 29.0 | 28.0 | 28.0 | 28.0 | 28.0 | 28.0 |
| | ACRYLOYL MORPHOLINE (ACMO) | 145 | 141 | | | | | | |
| CYCLIC ETHER-CONTAINING MONOFUNCTIONAL POLYMERIZABLE COMPOUND | CYCLIC TRIMETHYLOLPROPANE FORMAL ACRYLATE (CTFA) | 27 | 200 | 30.0 | 30.0 | 30.0 | 30.0 | 30.0 | 30.0 |
| | (2-METHYL-2-ETHYL-1,3-DIOXOLANE-4-YL)METHYL ACRYLATE (MEDOL-10) | -7 | 208 | | | | | | |
| HYDROXYL GROUP-CONTAINING MONOFUNCTIONAL POLYMERIZABLE COMPOUND | 4-HYDROXYBUTYL ACRYLATE (4HBA) | -32 | 144 | 13.5 | 13.5 | 13.5 | 13.5 | 13.5 | 13.5 |
| SATURATED ALIPHATIC GROUP-CONTAINING MONOFUNCTIONAL POLYMERIZABLE COMPOUND | Tert-BUTYL CYCLOHEXYL ACRYLATE (TBCHA) | 77 | 210 | | | | | | |
| POLYFUNCTIONAL POLYMERIZABLE COMPOUND | 2-(2-VINYLOXYETHOXY)ETHYL ACRYLATE (VEEA) | 39 | 186 | | | | | | |
| | TRIPROPYLENE GLYCOL DIACRYLATE (TPGDA) | 62 | 300 | 15.0 | 15.0 | 15.0 | 15.0 | 15.0 | 15.0 |
| | DIPROPYLENE GLYCOL DIACRYLATE (DPGDA) | 104 | 242 | | | | | | |
| POLYMERIZATION INHIBITOR | MEHQ | | | 0.2 | 0.2 | 0.2 | 0.2 | 0.2 | 0.2 |
| | LA-7RD | | | 0.1 | 0.1 | 0.1 | 0.1 | 0.1 | 0.1 |
| PHOTOINITIATOR — LOW-MOLECULAR-WEIGHT INITIATOR | Omnirad 819 | | 418 | 7.5 | 3.0 | | 3.0 | 3.0 | 6.0 |
| | ESACURE KIP 160 | | 342 | | | | 2.0 | | |
| | ESACURE A198 | | 413 | | 1.0 | 1.0 | 1.0 | 1.0 | 1.0 |
| | Speedcure DETX | | 268 | | | | | | |
| PHOTOINITIATOR — HIGH-MOLECULAR-WEIGHT INITIATOR | ESACURE 1001M | | 515 | | 2.0 | 5.0 | | | |
| | ESACURE KIP 150 | | 800 | | | | | 2.0 | |
| | SpeedCure 7010 | | 1839 | 1.0 | 3.5 | 3.5 | 3.5 | 3.5 | 2.5 |
| | Omnipol TX | | 660 | | | | | | |
| | OMNIPOL 910 | | 910 | | | | | | |
| | SpeedCure 7040 | | 1066 | | | | | | |
| SURFACTANT | BYK UV3500 | | | 0.5 | 0.5 | 0.5 | 0.5 | 0.5 | 0.5 |
| DISPERSING AGENT | Solsperse 36000 | | | 0.2 | 0.2 | 0.2 | 0.2 | 0.2 | 0.2 |
| COLORING MATERIAL | CARBON BLACK | | | 3.0 | 3.0 | 3.0 | 3.0 | 3.0 | 3.0 |
| TOTAL | | | | 100.0 | 100.0 | 100.0 | 100.0 | 100.0 | 100.0 |

| | EXAMPLE 13 | EXAMPLE 14 | EXAMPLE 15 | EXAMPLE 16 | EXAMPLE 17 | EXAMPLE 18 |
|---|---|---|---|---|---|---|
| PROPORTION OF MONOFUNCTIONAL POLYMERIZABLE COMPOUND mass% | 72.50 | 71.50 | 71.50 | 71.50 | 71.50 | 71.50 |
| MONOFUNCTIONAL POLYMERIZABLE COMPOUND / TOTAL AMOUNT OF POLYMERIZABLE COMPOUND mass% | 83% | 83% | 83% | 83% | 83% | 83% |
| POLYFUNCTIONAL POLYMERIZABLE COMPOUND / TOTAL AMOUNT OF POLYMERIZABLE COMPOUND mass% | 17% | 17% | 17% | 17% | 17% | 17% |
| VMOX and ACMO / TOTAL AMOUNT OF POLYMERIZABLE COMPOUND mass% | 33% | 32% | 32% | 32% | 32% | 32% |
| WEIGHTED AVERAGE (℃) OF GLASS TRANSITION TEMPERATURES OF POLYMERIZABLE COMPOUNDS | 55 | 54 | 54 | 54 | 54 | 54 |

| FILM THICKNESS [μm] | 5 | 5 | 5 | 5 | 5 | 5 |
|---|---|---|---|---|---|---|

| WAVELENGTH OF IRRADIATION LIGHT | 395 nmLED | 395 nmLED | 365 nmLED | 395 nmLED | 395 nmLED | 395 nmLED |
|---|---|---|---|---|---|---|

| EVALUATION | | EXAMPLE 13 | EXAMPLE 14 | EXAMPLE 15 | EXAMPLE 16 | EXAMPLE 17 | EXAMPLE 18 |
|---|---|---|---|---|---|---|---|
| | CURING PROPERTIES | B | B | A | B | B | A |
| | ODOR | B | A | A | A | A | A |
| | ADHESIVENESS | A | A | A | A | A | A |
| | VISCOSITY | AA | B | B | A | B | A |
| | BLOCKING RESISTANCE | A | A | A | A | A | A |
| | SHRINK PROPERTIES | A | A | A | A | A | A |

EP 4 613 824 A1

## FIG. 5

| TYPE OF MATERIAL | | NAME OF MATERIAL | Tg [℃] | MOLECULAR WEIGHT | EXAMPLE 19 | EXAMPLE 20 | EXAMPLE 21 | COMPARATIVE EXAMPLE 1 | COMPARATIVE EXAMPLE 2 |
|---|---|---|---|---|---|---|---|---|---|
| NITROGEN-CONTAINING MONOFUNCTIONAL POLYMERIZABLE COMPOUND | | N-VINYL METHYL OXAZOLIDINONE (VMOX) | 120 | 127 | 28.0 | 28.0 | 28.0 | | 28.0 |
| | | ACRYLOYL MORPHOLINE (ACMO) | 145 | 141 | | | | | |
| CYCLIC ETHER-CONTAINING MONOFUNCTIONAL POLYMERIZABLE COMPOUND | | CYCLIC TRIMETHYLOLPROPANE FORMAL ACRYLATE (CTFA) | 27 | 200 | 30.0 | 30.0 | 30.0 | 30.0 | 30.0 |
| | | (2-METHYL-2-ETHYL-1,3-DIOXOLANE-4-YL)METHYL ACRYLATE (MEDOL-10) | -7 | 208 | | | | | |
| HYDROXYL GROUP-CONTAINING MONOFUNCTIONAL POLYMERIZABLE COMPOUND | | 4-HYDROXYBUTYL ACRYLATE (4HBA) | -32 | 144 | 13.5 | 13.5 | 13.5 | 13.5 | 13.5 |
| SATURATED ALIPHATIC GROUP-CONTAINING MONOFUNCTIONAL POLYMERIZABLE COMPOUND | | Tert-BUTYL CYCLOHEXYL ACRYLATE (TBCHA) | 77 | 210 | | | | 28.0 | |
| POLYFUNCTIONAL POLYMERIZABLE COMPOUND | | 2-(2-VINYLOXYETHOXY)ETHYL ACRYLATE (VEEA) | 39 | 186 | | | | | |
| | | TRIPROPYLENE GLYCOL DIACRYLATE (TPGDA) | 62 | 300 | 15.0 | 15.0 | 15.0 | 15.0 | 15.0 |
| | | DIPROPYLENE GLYCOL DIACRYLATE (DPGDA) | 104 | 242 | | | | | |
| POLYMERIZATION INHIBITOR | | MEHQ | | | 0.2 | 0.2 | 0.2 | 0.2 | 0.2 |
| | | LA-7RD | | | 0.1 | 0.1 | 0.1 | 0.1 | 0.1 |
| PHOTOINITIATOR | LOW-MOLECULAR-WEIGHT INITIATOR | Omnirad 819 | | 418 | 6.0 | 3.0 | 3.0 | 6.0 | 6.0 |
| | | ESACURE KIP 160 | | 342 | | | | | |
| | | ESACURE A198 | | 413 | | | | | |
| | | Speedcure DETX | | 268 | | | | | 3.5 |
| | HIGH-MOLECULAR-WEIGHT INITIATOR | ESACURE 1001M | | 515 | | 2.0 | 2.0 | | |
| | | ESACURE KIP 150 | | 800 | | | | | |
| | | SpeedCure 7010 | | 1839 | 2.5 | 3.5 | 3.5 | 3.5 | |
| | | Omnipol TX | | 660 | 1.0 | | | | |
| | | OMNIPOL 910 | | 910 | | 1.0 | | | |
| | | SpeedCure 7040 | | 1066 | | | 1.0 | | |
| SURFACTANT | | BYK UV3500 | | | 0.5 | 0.5 | 0.5 | 0.5 | 0.5 |
| DISPERSING AGENT | | Solsperse 36000 | | | 0.2 | 0.2 | 0.2 | 0.2 | 0.2 |
| COLORING MATERIAL | | CARBON BLACK | | | 3.0 | 3.0 | 3.0 | 3.0 | 3.0 |
| TOTAL | | | | | 100.0 | 100.0 | 100.0 | 100.0 | 100.0 |

| | EXAMPLE 19 | EXAMPLE 20 | EXAMPLE 21 | COMPARATIVE EXAMPLE 1 | COMPARATIVE EXAMPLE 2 |
|---|---|---|---|---|---|
| PROPORTION OF MONOFUNCTIONAL POLYMERIZABLE COMPOUND mass% | 71.50 | 71.50 | 71.50 | 71.50 | 71.50 |
| MONOFUNCTIONAL POLYMERIZABLE COMPOUND / TOTAL AMOUNT OF POLYMERIZABLE COMPOUND mass% | 83% | 83% | 83% | 83% | 83% |
| POLYFUNCTIONAL POLYMERIZABLE COMPOUND / TOTAL AMOUNT OF POLYMERIZABLE COMPOUND mass% | 17% | 17% | 17% | 17% | 17% |
| VMOX and ACMO / TOTAL AMOUNT OF POLYMERIZABLE COMPOUND mass% | 32% | 32% | 32% | 0% | 32% |
| WEIGHTED AVERAGE (℃) OF GLASS TRANSITION TEMPERATURES OF POLYMERIZABLE COMPOUNDS | 54 | 54 | 54 | 40 | 54 |

| | EXAMPLE 19 | EXAMPLE 20 | EXAMPLE 21 | COMPARATIVE EXAMPLE 1 | COMPARATIVE EXAMPLE 2 |
|---|---|---|---|---|---|
| FILM THICKNESS [μm] | 5 | 5 | 5 | 5 | 5 |

| | | EXAMPLE 19 | EXAMPLE 20 | EXAMPLE 21 | COMPARATIVE EXAMPLE 1 | COMPARATIVE EXAMPLE 2 |
|---|---|---|---|---|---|---|
| WAVELENGTH OF IRRADIATION LIGHT | | 395 nmLED | 395 nmLED | 395 nmLED | 395 nmLED | 395 nmLED |
| EVALUATION | CURING PROPERTIES | A | B | B | C | AA |
| | ODOR | A | A | A | B | C |
| | ADHESIVENESS | A | A | A | C | A |
| | VISCOSITY | A | B | B | B | AA |
| | BLOCKING RESISTANCE | A | A | A | B | A |
| | SHRINK PROPERTIES | A | A | A | A | A |

Europäisches
Patentamt

European
Patent Office

Office européen
des brevets

# EUROPEAN SEARCH REPORT

**Application Number**

EP 25 16 1816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/287230 A1 (MATHEW MATHEW C [US] ET AL) 14 September 2023 (2023-09-14) * claims 13,18; examples * | 1-10 | INV. C09D11/101 C09D11/38 C09D11/322 C09D11/324 |
| X | WO 2022/055625 A1 (SUN CHEMICAL CORP [US]) 17 March 2022 (2022-03-17) * claims; examples * | 1-10 | |
| X | GB 2 561 984 A (FUJIFILM SPECIALITY INK SYSTEMS LTD [GB]) 31 October 2018 (2018-10-31) * examples 3,4 * | 1-10 | |
| A | WO 2022/253753 A1 (AGFA NV [BE]) 8 December 2022 (2022-12-08) * examples * | 1-10 | |

**TECHNICAL FIELDS SEARCHED (IPC)**

C09D

The present search report has been drawn up for all claims

| Place of search | Date of completion of the search | Examiner |
|---|---|---|
| Munich | 10 July 2025 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1816

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | | Publication date | Patent family member(s) | | Publication date |
|---|---|---|---|---|---|
| US 2023287230 A1 | | 14-09-2023 | BR 112023000862 A2 | | 07-02-2023 |
| | | | EP 4189021 A1 | | 07-06-2023 |
| | | | US 2023287230 A1 | | 14-09-2023 |
| | | | WO 2022026502 A1 | | 03-02-2022 |
| WO 2022055625 A1 | | 17-03-2022 | BR 112023001426 A2 | | 28-03-2023 |
| | | | EP 4211195 A1 | | 19-07-2023 |
| | | | US 2023303868 A1 | | 28-09-2023 |
| | | | WO 2022055625 A1 | | 17-03-2022 |
| GB 2561984 A | | 31-10-2018 | NONE | | |
| WO 2022253753 A1 | | 08-12-2022 | CN 117440994 A | | 23-01-2024 |
| | | | EP 4347728 A1 | | 10-04-2024 |
| | | | US 2024254351 A1 | | 01-08-2024 |
| | | | WO 2022253753 A1 | | 08-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024034096 A
- WO 2021199760 A

**Non-patent literature cited in the description**

- *CHEMICAL ABSTRACTS*, 272460-97-6
- *CHEMICAL ABSTRACTS*, 163702-01-0
- *CHEMICAL ABSTRACTS*, 813452-37-8
- *CHEMICAL ABSTRACTS*, 1003567-83-6
- *CHEMICAL ABSTRACTS*, 1003567-84-7
- *CHEMICAL ABSTRACTS*, 1003557-17-2
- *CHEMICAL ABSTRACTS*, 886463-10-1
- *CHEMICAL ABSTRACTS*, 162881-26-7
- *CHEMICAL ABSTRACTS*, 71868-15-0
- *CHEMICAL ABSTRACTS*, 925246-00-0